(19) Europäisches Patentamt
European Patent Office
Office européen des brevets

(11) **EP 2 724 995 A1**

(12) **EUROPÄISCHE PATENTANMELDUNG**

(43) Veröffentlichungstag:
**30.04.2014 Patentblatt 2014/18**

(51) Int Cl.:
***C03C 10/00*** *(2006.01)*

(21) Anmeldenummer: **13186925.7**

(22) Anmeldetag: **01.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **13.03.2009 DE 102009013127**

(62) Dokumentnummer(n) der früheren Anmeldung(en) nach Art. 76 EPÜ:
**10703640.2 / 2 406 195**

(71) Anmelder: **Schott AG**
**55122 Mainz (DE)**

(72) Erfinder:
• **Siebers, Friedrich, Dr.**
**55283 Nierstein (DE)**

• **Zenker, Thomas, Dr.**
**55268 Nieder-Olm (DE)**
• **Goetz, Helga**
**55262 Heidesheim (DE)**
• **Taplan, Martin**
**55120 Mainz (DE)**

(74) Vertreter: **Mehler Achler**
**Patentanwälte**
**Bahnhofstraße 67**
**65185 Wiesbaden (DE)**

Bemerkungen:
Diese Anmeldung ist am 01-10-2013 als Teilanmeldung zu der unter INID-Code 62 erwähnten Anmeldung eingereicht worden.

(54) **Transparente, eingefärbte Kochflächen**

(57) Die Erfindung betrifft eine transparente, eingefärbte Kochfläche mit verbesserter farbiger Anzeigefähigkeit, bestehend aus einer Glaskeramik mit Hochquarz-Mischkristallen als vorherrschender Kristallphase, wobei die Glaskeramik, bis auf unvermeidliche Spuren, keines der chemischen Läutermittel Arsenoxid und/oder Antimonoxid enthält,.

Um einem Bediener bei einer solchen Kochfläche eine verbesserte Betriebsanzeige mit deutlich verbessertem Informationsgehalt zur Verfügung zu stellen, ist es erfindungsgemäß vorgesehen, dass die Glaskeramik Transmissionswerte von größer als 0,1 % im Bereich des sichtbaren Lichtes im gesamten Wellenlängenbereich größer als 450 nm, eine Lichttransmission im Sichtbaren von 0,8 - 5 % und eine Transmission im Infraroten bei 1600 nm von 45 - 85 % aufweist, dass eine Anzeigevorrichtung vorgesehen ist, und dass die Anzeigevorrichtung eine Anzeigeeinrichtung aufweist, die unterschiedliche Betriebszustände mit unterschiedlichen Farben und/oder Symbolen anzeigend ausgebildet ist, und dass anstelfe oder in Ergänzung zu roten Anzeigen eine oder mehrere andersfarbige Anzeigen unter der Kochfläche angeordnet sind.

Fig. 1: Messung des $pO_2$ als Funktion der Temperatur und Bestimmung derTemperatur des Gleichgewichts-Sauerstoffpartialdrucks T ($pO_2$ = 1 bar) am Beispiel von Glas Nr. 9

**Beschreibung**

Die Erfindung bezieht sich auf eine transparente, eingefärbte Kochfläche bestehend aus einer Glaskeramik mit Hochcluarz-Mischkristallen als vorherrschender Kristallphase sowie auf ein Verfahren zu deren Herstellung.

Kochfelder mit einer Glaskeramikplatte als Kochfläche sind gängiger Stand der Technik. Solche Glaskeramikplatten liegen üblicherweise als ebene Platten vor oder sind dreidimensional verformt.

Glaskeramiken mit Hochquarz-Mischkristallen als vorherrschender Kristallphase werden aus kristallisierbaren Lithiumaluminiumsilikat-Gläsern hergestellt.

Die Herstellung dieser Glaskeramiken erfolgt in mehreren Stufen.

Bei der großtechnischen Herstellung von Glaskeramik wird zunächst das kristallisierbare Ausgangsglas aus einem Gemisch aus Scherben und pulverförmigen Gemengerohstoffen bei Temperaturen üblicherweise zwischen 1500 und 1650°C erschmolzen. Bei der Schmelze wird typischerweise Arsen- und/oder Antimonoxid als Läutermittel eingesetzt. Diese Läutermittel sind verträglich mit den geforderten Glaskeramikeigenschaften und führen zu guten Blasenqualitäten der Schmelze, Auch wenn diese Stoffe fest im Glasgerüst eingebunden sind, so sind sie doch unter Sicherheitsund Umweltschutzaspekten nachteilig. So müssen bei der Rohstoffgewinnung, - aufbereitung und wegen der Verdampfung bei der Schmelze besondere Vorsichtsmaßnahmen ergriffen werden.

Neuerdings wird insbesondere der Einsatz von $SnO_2$ als unbedenkliches Läutermittel beschrieben. Um gute Blasenqualitäten zu erreichen, werden bei konventionellen Schmelztemperaturen (maximal ca. 1680°C) neben $SnO_2$ bevorzugt Halogenid-Verbindungen als zusätzliche Läutermittel eingesetzt. So wird in den japanischen Anmeldungen JP 11 100 229 A und JP 11 100 230 A der Einsatz von 0,1 - 2 Gew.-% $SnO_2$ und 0 -1 Gew.-% Cl beschrieben. Nach diesen Schriften wird die Einfärbung durch Zusatz von $V_2O_5$ als alleiniges Färbemittel erreicht.

Der Zusatz von 0,05 - 1 Gew.-% Fluor (US 2007 0004578 A1) und 0,01 - 1 Gew.-% Brom (US 2008 0026927 A1) zur Unterstützung der Läuterung mit $SnO_2$ wird ebenfalls offenbart. Auch in diesen Schriften sind Läutertemperaturen unterhalb 1700°C beschrieben. Das Hauptfärbemittel ist $V_2O_5$. Nachteilig ist der Zusatz der Halogenide, da sie bei der Schmelztemperatur stark verdampfen und dabei toxische Verbindungen, wie z.B. HF bilden.

Der Einsatz von $SnO_2$ in Verbindung mit Hochtemperaturläuterung oberhalb 1700°C zur Erreichung guter Blasenqualitäten wird in der DE 199 39 787 C2 beschrieben. Diese Schrift liefert aber keinen Hinweis auf das Erreichen einer guten Anzeigefähigkeit im Wellenlängenbereich ab 450 nm.

Nach dem Einschmelzen und Läutern erfährt das Glas üblicherweise eine Heißformgebung durch Walzen oder neuerdings Floaten, um Platten herzustellen. Für eine wirtschaftliche Herstellung ist zum einen eine niedrige Schmelztemperatur und eine niedrige Verarbeitungstemperatur $V_A$ gewünscht, zum anderen darf das Glas bei der Formgebung keine Entglasung zeigen. Das heißt, es dürfen sich keine störenden Kristalle bilden, die in den Ausgangsgläsern und den daraus hergestellten Glaskeramiken die Festigkeit beeinträchtigen. Da die Formgebung in der Nähe der Verarbeitungstemperatur $V_A$ (Viskosität $10^4$ dPas) des Glases stattfindet, muss gewährleistet sein, dass die obere Entglasungstemperatur der Schmelze in der Nähe und günstigerweise unter der Verarbeitungstemperatur liegt, um die Bildung störender Kristalle zu vermeiden.

Anschließend wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 und 800°C Keime, üblicherweise aus $ZrO_2/TiO_2$-Mischkristallen, erzeugt werden. Auch $SnO_2$ kann an der Keimbildung beteiligt sein. Bei anschließender Temperaturerhöhung wachsen die Hochquarz-Mischkristalle auf diesen Keimen auf. Hohe Kristallwachstumsgeschwindigkeiten, wie sie für eine wirtschaftliche, schnelle Keramisierung gewünscht sind, werden bei Temperaturen von 850 bis 950°C erreicht. Bei dieser maximalen Herstelltemperatur wird das Gefüge der Glaskeramik homogenisiert und die optischen, physikalischen und chemischen Eigenschaften der Glaskeramik eingestellt. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einen Bereich von ca. 950 bis 1200°C. Mit dem Übergang von Hochquarz- zu Keatit-Mischkristallen erhöht sich der thermische Ausdehnungskoeffizient der Glaskeramik und die Transparenz verringert sich durch die mit der Vergrößerung der Kristalle einhergehende Lichtstreuung. In der Regel sind Glaskeramiken mit Keatit-Mischkristallen als Hauptphase daher transluzent oder opak und die damit verbundene Lichtstreuung wirkt sich negativ auf die Anzeigefähigkeit aus.

Eine Schlüsseleigenschaft dieser Glaskeramiken mit Hochquarz-Mischkristallen als Hauptkristallphase ist die Herstellbarkeit von Werkstoffen, die über einen äußert niedrigen Wärmeausdehnungskoeffizienten im Bereich von Raumtemperatur bis 700°C und darüber von < 0,5 x $10^{-6}$/K verfügen. Aufgrund der niedrigen thermischen Ausdehnung besitzen diese Glaskeramiken eine ausgezeichnete Temperaturunterschiedsfestigkeit und Temperaturwechselbeständigkeit.

Bei der Anwendung als Kochfläche hat die technische Entwicklung aufgrund der Erfordernisse aus dem praktischen Einsatz zu sehr spezifischen, teilweise gegenläufigen Anforderungen an die Transmission geführt.

Um die störende Durchsicht auf die technischen Bauelemente unter der Glaskeramik-Kochfläche zu verhindern und um die Blendwirkung durch strahlende Heizkörper, insbesondere helle Halogen-Heizkörper zu vermeiden, sind die Glaskeramik-Kochflächen in ihrer Lichttransmission begrenzt. Andererseits sollen während des Betriebes, auch bei niedriger Leistung die strahlenden Heizkörper gut erkennbar sein, um eine Verbrennungsgefahr auszuschließen. Werden derartige Kochflächen jedoch abgeschaltet, ist das Abkühlen der Heizelemente nach dem Glühen nicht mehr sichtbar, obwohl durch die Wärmekapazität der verwendeten und anwesenden Materialien noch eine erhebliche Hitze vorhanden ist, die ausreicht, ernsthafte Verletzungen herbeizuführen. Auch für die Anzeigefähigkeit ist eine gewisse Lichttransmission erforderlich, da die üblichen roten Leuchtdioden unterhalb der Kochplatte eingebaut werden. Um diesen Anforderungen zu genügen, sind Glaskeramik-Kochflächen üblicherweise auf Werte der Lichttransmission von 0,5 bis 2,5 % eingestellt. Dies wird durch Zusätze von färbenden Elementen erreicht. Glaskeramik-Kochflächen erscheinen dann unabhängig vom verwendeten Farbelement aufgrund der niedrigen Lichttransmission in Aufsicht schwarz, in Durchsicht je nach verwendeten farbgebenden Elementen meist rot, rotviolett oder braunorange.

Farbige Anzeigen bestehen aus Licht emittierenden elektronischen Bauteilen, meist Leuchtdioden, die unterhalb der Kochfläche eingebaut werden. Sie sind für den Bedienungskomfort und den sicheren Betrieb gewünscht. So werden beispielsweise die aktuelle Heizleistung oder Restwärme der verschiedenen Kochzonen optisch angezeigt. Die Anzeige der Restwärme ist für die sichere Handhabung wichtig, wenn die Heizkörper nicht strahlen oder wenn, wie bei induktiv beheizten Kochflächen generell nicht zu erkennen ist, dass die Kochfläche heiß ist. Die üblichen roten Leuchtdioden strahlen bei Wellenlängen um 630 nm. Um den Bedienungskomfort und die technischen Funktionen zu verbessern, aber auch um den Hausgeräteherstellern über das Design eine Möglichkeit zur Differenzierung zu eröffnen, sind neben den üblichen roten auch andersfarbige Anzeigen gewünscht.

Es sind Kochfelder japanischer Herkunft bekannt, bei denen eine LCD-Anzeige vorhanden ist, die grün, orange und rot hinterleuchtet werden kann.

Die unterschiedlichsten Farben, mit Ausnahme der Farbe rot, die hierbei verwendet werden, dienen heute ausschließlich ästhetisch Aspekten. Die Farbe rot zeigt jedoch üblicherweise immer Gefahren an.

Sicherheitsrelevante Informationen sind nur über gleichfarbige Anzeigelemente oder Symbole in Siebensegmentanzeigen codiert und bekannt. In sicherheitskritischen Situationen ist der Anwender gezwungen, nachzudenken, was die Anzeige ihm anzeigen will. Hierbei kommt hinzu, dass durch den hohen Technisierungsgrad in Küchen und die vielfältigen vorhandenen Geräte in Küchen, wie Kochherde, Backöfen, Mikrowellen, Grillgeräte, Dunstabzugshauben, Kühl- und Gefriergeräte sowie Brotschneidemaschinen etc., eine Flut von Informationen auf den Anwender wirkt, wobei die Informationen von Gerät zu Gerät unterschiedlich sind. Beispielsweise kann ein rotes Blinklicht bei dem einen Gerät eine Gefahr bedeuten, während es bei dem anderen Gerät einen Betrieb anzeigt.

Ferner kann ein Anwender nicht über die Farben den Betriebs- und Fehlerzustand erkennen, also inwieweit das Gerät betriebsbereit ist und ob ein Hinweis auf einen möglichen Fehlerzustand vorhanden ist.

Im Infraroten ist eine Transmission der Kochfläche von 45 - 85 % gewünscht.

Eine hohe Transmission im Infraroten ist vorteilhaft, weil die Strahlung direkt auf den Topfboden trifft, dort absorbiert wird und damit ein schnelleres Ankochen erreicht wird. Bei zu hoher Transmission kann sich die Umgebung der Kochfläche bei Fehlbedienung, z. B. bei frei strahlender Kochzone durch einen verschobenen Topf zu stark erwärmen.

Ein früherer Typ von Glaskeramik-Kochflächen, bekannt unter dem Namen Ceran Color®, hergestellt von der SCHOTT AG, besaß gute farbliche Anzeigefähigkeit. Ceran Color® ist durch Zusätze von NiO, CoO, $Fe_2O_3$ und MnO gefärbt und durch $Sb_2O_3$ geläutert. Durch diese Kombination von Farboxiden wird eine Lichttransmission von typischerweise 1,2 % für Kochflächen mit üblicher Dicke von 4 mm eingestellt. Die Transmission im Bereich von 380 nm bis 500 nm beträgt je nach Wellenlänge 0,1 - 2,8 %. Bei einer für rote Leuchtdioden üblichen Wellenlänge von 630 nm beträgt die Transmission ca. 6 %. Nachteilig bei diesem früheren Typ von Glaskeramik-Kochflächen ist, dass die verwendeten Farboxide auch sehr stark im Infraroten absorbieren. Die IR-Transmission bei 1600 nm beträgt weniger als 20 %. Damit ist die Ankochgeschwindigkeit herabgesetzt. Die Transmissionskurve von Ceran Color® ist in dem Buch "Low Thermal Expansion Glass Ceramics", Editor Hans Bach, Springer-Verlag Berlin Heidelberg 1995, auf Seite 66 abgebildet (ISBN 3-540-58598-2). Die Zusammensetzung ist in dem Buch "Glass-Ceamic Technology", Wolfram Höland und George Beall, The American Ceramic Society 2002 in Tabelle 2 - 7 aufgeführt.

In neueren, weiter entwickelten Glaskeramik-Kochflächen wird meist $V_2O_5$ zur Einfärbung verwendet, weil es die besondere Eigenschaft besitzt, im Bereich des sichtbaren Lichtes zu absorbieren und im Bereich der Infrarotstrahlung eine hohe Transmission zu erlauben.

Die Einfärbung durch $V_2O_5$ stellt sich als ein recht komplexer Prozess dar. Wie in früheren Untersuchungen (DE 19939787 C2) gezeigt wurde, ist für die Überführung des Vanadiumoxids in den färbenden Zustand ein Redoxvorgang Voraussetzung. Im kristallisierbaren Ausgangsglas färbt das $V_2O_5$ noch relativ schwach und führt zu einem leicht grünlichen Farbton. Bei der Keramisierung findet der Redoxvorgang statt, das Vanadium wird reduziert und der Redoxpartner wird oxidiert. Als primärer Redoxpartner fungiert das Läutermittel. Gezeigt wurde das durch Mössbauer-Untersuchungen an Sb- und Sn-geläuterten Zusammensetzungen. Beim Keramisieren wird ein Teil des $Sb^{3+}$ bzw. $Sn^{2+}$ im Ausgangsglas in die höhere Oxidationsstufe $Sb^{5+}$ bzw. $Sn^{4+}$ überführt. Es ist anzunehmen, dass das Vanadium in reduzierter Oxidationsstufe als $V^{4+}$ oder $V^{3+}$ in den Keimkristall eingebaut wird und dort durch Elektronen-Chargetransfer-Reaktionen intensiv färbt. Als weiterer Redoxpartner kann auch $TiO_2$ die Einfärbung durch Vanadiumoxid verstärken. Neben der Art und Menge der Redoxpartner im Ausgangsglas hat auch der Redoxzustand der im Glas bei der Schmelze eingestellt wird einen Einfluss. Ein niedriger Sauerstoff-Partialdruck $pO_2$ (reduzierend eingestellte Schmelze) z.B. durch hohe Schmelztemperaturen verstärkt die Farbwirkung des Vanadiumoxids.

Einen weiteren Einfluss auf die Farbwirkung des Vanadiumoxid haben die Keramisierungsbedingungen. Insbesondere führen hohe Keramisierungstemperaturen und längere Keramisierungszeiten zu einer stärkeren Einfärbung.

Die beschriebenen Zusammenhänge bei der Einfärbung durch $V_2O_5$ wird der Fachmann nutzen, um durch eine bestimmte Glaszusammensetzung, bestimmte Redox-Einstellungen des $pO_2$ bei der Schmelze und die Keramisierungsbedingungen den gewünschten Transmissionsverlauf einzustellen. Bisher war es aber nicht möglich, alle Anforderungen wie spezifikationsgerechte Lichttransmission, hohe IR-Transmission, sowie Anzeigefähigkeit für standardmäßige rote Leuchtdioden zusammen mit der gewünschten verbesserten Anzeigefähigkeit für andersfarbige Leuchtanzeigen zu erreichen.

Die Form der Absorptionsbande des Vanadinoxids und damit die Transmission im Bereich des sichtbaren Lichtes im gesamten Wellenlängenbereich größer als 450 nm bis zur oberen Grenze von 750 nm konnte nicht zu höheren Transmissionen angepasst werden.

Beispiele für solche $V_2O_5$-gefärbten Glaskeramik-Kochflächentypen sind das $Sb_2O_3$-geläuterte Ceran Hightrans® und das Sn02-geläuterte Ceran Suprema®, die von der Firma SCHOTT AG hergestellt werden. Die Transmissionskurven dieser beiden Glaskeramiken sind veröffentlicht in dem Buch "Low Thermal Expansion Glass Ceramics", Second Edition, Editor Hans Bach, Dieter Krause, Springer-Verlag Berlin Heidelberg 2005, auf Seite 63 (ISBN 3-540-24111-6).

Der Transmissionswert von 0,1 % wird bei den genannten Glaskeramik-Kochflächen und bei anderen im Markt befindlichen Glaskeramik-Kochflächen in dem für die Sichtbarkeit farbiger, insbesondere blauer und grüner Anzeigen wichtigen Wellenlängen von ca. 450 - 550 nm unterschritten. Andere wesentliche Anforderungen an die Transmission werden von diesen Glaskeramik-Kochflächen erfüllt: hohe Infrarot-Transmission für hohe Ankochgeschwindigkeiten, spezifikationsgerechte Transmission für standardmäßige rote Leuchtdioden bei ca. 630 nm und eine Lichttransmission um 1,5 %.

Um diesen Nachteil zu beheben offenbart die europäische Patentanmeldung EP 1465460 A2 eine Glaskeramik-Kochfläche, die im CIE-Farbsystem gemessen, mit Normlicht C einen Y-Wert (brightness) von 2,5 - 15 besitzt, bei einer Dicke von 3 mm. Die Bezeichnungen "brightness" und Lichttransmission entsprechen dergleichen Messgröße. Der Y-Wert ist identisch mit dem Wert der Lichttransmission, gemessen nach DIN 5033. Mit dieser Lichttransmission werden verbesserte Anzeigen für blaue und grüne Leuchtdioden erreicht. Die offenbarten Zusammensetzungen sind mit $As_2O_3$ und/oder $Sb_2O_3$, teilweise in Kombination mit $SnO_2$ geläutert. Die Einfärbung wird durch $V_2O_5$ vorgenommen.

In dem Vergleichsbeispiel wird aufgezeigt, dass bei einer Lichttransmission von 1,9 % die Anzeigefähigkeit für blaue und grüne Leuchtdioden mit den aufgeführten Materialzusammensetzungen unzureichend ist. Die beanspruchten hohen Werte der Lichttransmission von mindestens 2,5 % und bevorzugt höher sind jedoch nachteilig, hinsichtlich der Abdeckung der elektronischen Bauteile unterhalb der Kochfläche. Außerdem wird das ästhetische schwarze Erscheinungsbild der Kochfläche in Aufsicht beeinträchtigt.

Es ist Aufgabe der Erfindung, eine Kochfläche der eingangs erwähnten Art bereitzustellen, die eine verbesserte Anzeigefähigkeit aufweist, wobei insbesondere ein Benutzer eindeutig und intuitiv Betriebs- und/oder Gefahrensituationen erkennen kann.

Die erfindungsgemäßen Kochflächen sollen allen weiteren Anforderungen genügen, die an Kochflächen gestellt werden wie z.B.: chemische Beständigkeit, Temperaturbelastbarkeit und hohe Temperatur/Zeitbelastbarkeit hinsichtlich Änderungen ihrer Eigenschaften (wie z.B. thermische Ausdehnung, Transmission, Aufbau von Spannungen).

Es ist weiterhin Aufgabe der Erfindung, ein Verfahren zum Anzeigen eines Betriebszustandes einer Kochfläche bereitzustellen, das eine Betriebs- und/oder Gefahrenerkennung ermöglicht.

Diese Aufgaben werden durch eine Kochfläche gemäß Anspruch 1 und durch ein Verfahren gemäß Anspruch 11 gelöst. Vorteilhafte Weiterbildungen sind in den Unteransprüchen angegeben.

Die eingefärbten Kochflächen verfügen über Transmissionswerte von größer als 0,1 % im Bereich des sichtbaren Lichtes im gesamten Wellenlängenbereich von größer als 450 nm, eine Lichttransmission im Sichtbaren von 0,8 - 5 % (vorzugsweise 0,8-2,5%) und eine Transmission im Infraroten bei 1600 nm von 45 - 85 %.

Durch die erfindungsgemäße Lichttransmission insbesondere im Bereich von 0,8-2,5 % ist sichergestellt, dass die störende Durchsicht auf die technischen Bauelemente unter der Glaskeramik-Kochfläche verhindert wird und das ästhetische schwarze Erscheinungsbild in Aufsicht gewährleistet ist. Strahlende Heizkörper sind im Betrieb sichtbar und übliche rote Leuchtdioden-Anzeigen gut erkennbar. Durch die Transmission von größer als 0,1 % im Bereich des sichtbaren Lichtes im gesamten Wellenlängenbereich größer als 450 nm sind auch andersfarbige Anzeigen gut erkennbar. Angesichts der Leuchtkraft handelsüblicher blauer, grüner, gelber oder oranger Leuchtdioden ist dieser Transmissionswert ausreichend und stellt eine deutliche Verbesserung gegenüber dem Stand der Technik dar. Insbesondere die Anzeige mit blauen und grünen Farben ist deutlich verbessert. Anzeigen mit weißem Licht werden durch den Transmissionsverlauf im gesamten Wellenlängenbereich größer als 450 nm farblich weniger verfälscht.

Erfindungsgemäß können somit farbige und insbesondere mehrfarbige Anzeigen an der Kochfläche realisiert werden, wobei die Anzeigeelemente von der Rückseite der Kochfläche her ihr Licht einstrahlen und dieses dann entsprechend auf der Vorderseite vom Betrachter wahrgenommen wird. Das Transmissionsverhalten der Kochfläche ermöglicht somit eine eindeutige Darstellung verschiedener Wärmezustände und/oder Fehlerzustände.

Um verschiedene Wärmezustände anzuzeigen, kann erfindungsgemäß insbesondere eine Anzeige verwendet werden, die je nach Wärme einen roten, orangen oder blauen Farbeindruck vermittelt. Hierbei steht die rote Farbe für Hitze, die orange Farbe für Wärme und eine blaue Farbgestaltung für kalt. Beispielsweise besitzt die Anzeige ein rotleuchtendes, ein ggf. orangeleuchtendes und ein ggf. blauleuchtendes Feld, welche insbesondere aus LEDs ausgebildet werden. Darüber hinaus ist es möglich, ein Leuchtfeld vorzusehen, bei dem ein Farbwechsel innerhalb eines einzigen Feldes oder entlang verschiedener Farbfelder oder -segmente stufenlos verlaufend ausfällt.

Beiden Ausführungsformen ist gemeinsam, dass ein Bediener, ohne sich mit dem Bedienfeld auszukennen oder überlegen zu müssen, welche Bedeutung eine Anzeige hat, intuitiv über die Farbcodierung den Wärmezustand des Gerätes erkennt. Diese farbigen Anzeigen, die stufenweise oder kontinuierlich stufenlos und korreliert mit der Hitze den Temperaturzustand anzeigen, können neben jedem einzelnen Koch- oder Wärmefeld oder benachbart zu einem entsprechenden Betätigungsschalter oder in einem extra Anzeigefeld des Kochfeldes angeordnet sein.

Erfindungsgemäß können derartige Farbfelder, die entweder über verschiedene einzelne Farbfelder oder ein einziges Farbfeld verfügen, Fehlerzustände anzeigen. Hierbei kann der Farbverlauf von rot über gelb nach grün und insbesondere diskret, d.h. gestuft über rot nach gelb nach grün erfolgen. Hierbei bedeutet rot einen sicherheitskritischen Fehlerzustand oder Betriebszustand, gelb einen Fehlerzustand, der nicht sicherheitskritisch ist, und grün uneingeschränkte Betriebsbereitschaft.

Dies bedeutet, dass der Verwender mit einer Farbsymbolik unterrichtet wird, die ihm aus dem täglichen Leben vertraut ist (rot-blau = Feuer-Wasser; rot-gelb-grün = Ampelfarben). Dies erlaubt es ihm, die Zustände des Gerätes schnell und sicher zu erfassen. Hierbei ist von Vorteil, dass eine deutliche Steigerung der Anwendungssicherheit der Ergonomie und des Vertrauens in das Gerät und insbesondere in ein Kochfeld erzielt wird.

Unterhalb von 350 nm, im Bereich des Ultravioletten, werden die niedrigen Transmissionswerte von deutlich weniger als 0,01 % der bekannten Glaskeramik-Kochflächen auch mit der erfindungsgemäßen Kochfläche sichergestellt. Die Blockierung des UV-Lichtes ist vorteilhaft zum Schutz organischer Komponenten, wie z.B. Kleber in den technischen Einbauten unter der Kochfläche, sowie als Schutz beim Kochen, falls blaue Leuchtdioden mit Ultraviolett-Strahlungsanteil zur Anzeige eingesetzt werden.

Durch die eingestellte Infrarot-Transmission von 45 - 85 %, gemessen bei 1600 nm, werden die Forderungen an hohe Ankochgeschwindigkeit und Schutz vor unzulässiger Erwärmung der Umgebung der Kochfläche erreicht. Da die erfindungsgemäßen Werte der Transmission und Lichttransmission für die Funktion der Kochfläche maßgeblich sind, gelten sie unabhängig von der Dicke der Kochfläche, die üblicherweise zwischen 2,5 und 6 mm beträgt. Kleinere Dicken sind nachteilig hinsichtlich der Festigkeit und größere Dicken sind unwirtschaftlich, weil sie mehr Material erfordern und die Keramisierungsgeschwindigkeit herabsetzen. Meist liegt die Dicke der Kochfläche bei etwa 4 mm. Die angegeben Transmissionswerte für kommerzielle Kochflächen und in den Ausführungsbeispielen beziehen sich daher, wenn nicht anders ausgeführt auf diese Dicke. Wenn die Kochfläche über Formgebung mit Walzen hergestellt wird, ist die Unterseite meist mit Noppen versehen, um sie vor festigkeitserniedrigenden Verletzungen bei der Herstellung zu schützen. Oft wird die Kochflächen-Unterseite im Bereich der farbigen Anzeigen mit transparentem organischem Polymer geglättet, um eine optische Verzerrung durch die Noppen zu vermeiden. Bei Kochflächen mit glatter Unterseite ohne Noppen sind farbigen Anzeigen unverzerrt und heller wahrnehmbar.

Um die Forderungen an die Temperaturbelastbarkeit sicherzustellen verfügen die erfindungsgemäßen Kochflächen über niedrige Wärmeausdehnungskoeffizienten von weniger als $1 \cdot 10^{-6}/K$, bevorzugt von $(0 \pm 0{,}3) \cdot 10^{-6}/K$.

Die erfindungsgemäßen transparenten, eingefärbten Kochflächen zeichnen sich also durch eine Zusammensetzung ohne Verwendung von Arsen- und/oder Antimonoxid als Läutermittel aus und sind damit technisch frei von diesen unter Sicherheits- und Umweltschutzaspekten nachteiligen Komponenten. Als Verunreinigung liegen diese Komponenten üblicherweise in Gehalten von weniger als 500 ppm vor.

Das erfindungsgemäße Verfahren zur Herstellung einer transparenten, eingefärbten Kochfläche mit verbesserter farbiger Anzeigefähigkeit zeichnet sich dadurch aus, dass es eine Glaskeramik mit Hochquarz-Mischkristall als vorherrschender Kristallphase ausbildet und dass bis auf unvermeidliche Spuren, auf die chemischen Läutermittel Arsen- und/oder Antimonoxid verzichtet wird und die Kochfläche auf Transmissionswerte von größer als 0,1 % im Bereich des sichtbaren Lichtes im gesamten Wellenlängenbereich größer als 450 nm, eine Lichttransmission im Sichtbaren von 0,8 bis 2,5 % und eine Transmission im Infraroten bei 1600 nm von 45 bis 85 % eingestellt wird.

Um die Blasenqualität zu verbessern können neben dem eingesetzten $SnO_2$ zusätzlich weitere Läuterzusätze wie z.B. $CeO_2$, Sulfatverbindungen, Halogenidverbindungen eingesetzt werden. Deren Gehalte sind üblicherweise auf Mengen bis 1 Gew.-% begrenzt. Bei der Herstellung von Kochflächen sind als gute Blasenqualitäten solche mit Blasenzahlen von unter 10, bevorzugt unter 5 Blasen/kg Glas (bezogen auf Blasengrößen größer als 0,1 mm) gewünscht.

Bevorzugt ist die Transmission der Kochfläche auf Werte von

> 0,15 % bei 450 nm

> 0,15 % bei 500 nm

> 0,25 % bei 550 nm

3 - 9 % bei 630 nm

50 - 80 % bei 1600 nm

und eine Lichttransmission im Sichtbaren von 1,0 - 2,0 % eingestellt.

Bei diesen Werten ist die farbliche Anzeigefähigkeit weiter verbessert und die unterschiedlichen Forderungen an den Transmissionsverlauf werden weiter optimiert. Eine weiter verbesserte Abdeckung der technischen Einbauten unterhalb der Kochflächen-Glaskeramik und eine besonders ästhetisches schwarzes Aussehen in Auflicht wird erreicht, wenn die Lichttransmission weniger als 1,7 % beträgt. Transmissionswerte der Kochfläche bei 630 nm von 3 bis 9 % entsprechen den Toleranzwerten handelsüblicher Kochflächen. Es ist vorteilhaft diese Werte einzustellen, damit das Erscheinungsbild der gebräuchlichen roten LED-Anzeigen auch bei der erfindungsgemäßen Kochfläche unverändert ist.

Weiter verbessert sich die Anzeigefähigkeit, wenn in bevorzugter Ausführung die Transmission der Kochfläche auf Werte von

> 0,10 % bei 400 nm

> 0,15 % bei 450 nm

> 0,25 % bei 500 nm

> 0,30 % bei 550 nm

3 - 9 % bei 630 nm

50 - 80 % bei 1600 nm

und eine Lichttransmission im Sichtbaren von 1,0 - 1,7 % eingestellt wird.

Die erfindungsgemäße Kochfläche besitzt bevorzugt eine Zusammensetzung der Glaskeramik, die in Gew.-% auf Oxidbasis im Wesentlichen besteht aus:

| | |
|---|---|
| $Li_2O$ | 3,0 - 4,2 |
| $\sum Na_2O+K_2O$ | 0,2 - 1,5 |
| MgO | 0 - 1,5 |
| $\sum CaO+SrO+BaO$ | 0 - 4 |
| ZnO | 0 - 2 |
| $B_2O_3$ | 0 - 2 |
| $Al_2O_3$ | 19 - 23 |
| $SiO_2$ | 60 - 69 |
| $TiO_2$ | 2,5 - 4 |
| $ZrO_2$ | 0,5 - 2 |
| $P_2O_5$ | 0 - 3 |
| $SnO_2$ | 0,1 - < 0,6 |
| $\sum TiO_2+ZrO_2+SnO_2$ | 3,8 - 6 |
| $V_2O_5$ | 0,01 - 0,06 |
| $Fe_2O_3$ | 0,03 - 0,2, |

mit der Bedingung:

$$1 < Fe_2O_3 / V_2O_5 < 8.$$

Der Begriff "im wesentlichen besteht aus" bedeutet, dass die aufgeführten Komponenten wenigstens 96 % in der Regel 98 % der Gesamtzusammensetzung betragen sollen. Eine Vielzahl von Elementen wie z.B. F, Cl, die Alkalien Rb, Cs oder Elemente wie Hf sind bei den großtechnisch verwendeten Gemengerohstoffen übliche Verunreinigungen. Andere Verbindungen wie z.B. solche der Elemente Ge, seltene Erden, Bi, W, Nb, Ta, Y können in geringen Anteilen zugesetzt werden.

Neben dem Farboxid $V_2O_5$ in Gehalten von 0,01 bis 0,06 Gew.-% können auch weitere färbende Komponenten wie z.B. Chrom-, Mangan-, Kobalt-, Nickel-, Kupfer-, Selen-, Selten Erd-, Molybdänverbindungen eingesetzt werden, um die Färbung zu unterstützten. Ihr Gehalt ist auf Mengen von maximal etwa 1 Gew.-% begrenzt, weil diese Verbindungen in der Regel die Transmission im Infrarot absenken. Außerdem können diese größtenteils polyvalenten Verbindungen die Einfärbung des $V_2O_5$ über Redox-Reaktionen stören und die Einstellung der erfindungsgemäßen Transmission erschweren.

Durch Zusatz von 50 - 400 ppm $Nd_2O_3$ ist es möglich, die Glaskeramik-Kochfläche zu markieren. Die Absorptionsbande des Nd im nahen Infrarot bei 806 nm liegt in einem Bereich hoher Transmissionswerte der Glaskeramik und ist so markant im Transmissionsspektrum. Dadurch kann das Kochflächenmaterial sicher dem Hersteller zugeordnet werden und mit optischen Scherbenerkennungsverfahren ist ein gutes Recycling möglich.

Der Wassergehalt der Ausgangsgläser zur Herstellung der erfindungsgemäßen Kochflächen liegt abhängig von der Wahl der Gemengerohstoffe und der Prozessbedingungen bei der Schmelze üblicherweise zwischen 0,015 und 0,06 mol/l. Dies entspricht β-OH-Werten von 0,16 bis 0,64 mm$^{-1}$ für die Ausgangsgläser.

Die Oxide $Li_2O$, $Al_2O_3$ und $SiO_2$ in den bevorzugten, angegebenen Grenzen sind notwendige Bestandteile der Hochquarz-Mischkristalle. Ein Mindestgehalt an $Li_2O$ von 3 Gew.-% ist erforderlich, doch führen $Li_2O$-Gehalte von über 4,2 Gew.-% in einem Herstellprozess häufig zu einer ungewollten Entglasung. Ein Gehalt von 3,2 bis 4,0 Gew.-% führt zu besonders guten Ergebnissen.

Zu Vermeidung hoher Viskositäten des Ausgangsglases und zur Unterdrückung der Neigung einer unerwünschten Entglasung von Mullit bei der Formgebung ist der $Al_2O_3$-Gehalt auf bevorzugt maximal 23 Gew.-%, insbesondere 22 Gew.-% begrenzt. Der $SiO_2$-Gehalt soll maximal 69 Gew.-% betragen, weil diese Komponente die Viskosität des Glases stark erhöht. Bevorzugt wird diese Komponente weiter auf Werte von maximal 68 und weiter maximal 67 Gew.-% begrenzt. Für gutes Einschmelzen der Gläser und für niedrige Formgebungstemperaturen sind höhere Gehalte von $SiO_2$ unwirtschaftlich. Der Mindestgehalt an $SiO_2$ soll 60 Gew.-%, insbesondere 62 Gew.-% betragen, weil dies für die geforderten Kochflächeneigenschaften, wie z.B. chemische Beständigkeit und Temperaturbelastbarkeit vorteilhaft ist.

Als weitere Komponenten können MgO, ZnO und $P_2O_5$ in die Hochquarz-Mischkristalle eingebaut werden. Der ZnO-Gehalt ist wegen der Problematik der Bildung unerwünschter Kristallphasen wie Zink-Spinell (Gahnit) bei der Keramisierung auf Werte von höchstens 2,0 Gew.-%, bevorzugt höchstens 1,8 Gew.-% begrenzt. Der MgO-Gehalt ist auf maximal 1,5 Gew.-%, bevorzugt bis zu 1,2 Gew.-% begrenzt, weil er sonst den Ausdehnungskoeffizienten der Glaskeramik unzulässig erhöht. Ein MgO-Mindestgehalt von 0,1 Gew.-% wird in der Regel benötigt, damit die thermische Ausdehnung der Glaskeramik nicht auf negative Werte fällt.

Die Zugabe der Alkalien $Na_2O$, $K_2O$ und der Erdalkalien CaO, SrO, BaO sowie von $B_2O_3$ verbessern die Schmelzbarkeit und die Entglasungsstabilität bei der Formgebung des Glases. Die Gehalte müssen jedoch begrenzt werden, weil diese Komponenten nicht in die Kristallphasen eingebaut werden, sondern im Wesentlichen in der Restglasphase der Glaskeramik verbleiben.

Zu hohe Gehalte erhöhen die thermische Ausdehnung der Glaskeramik in unzulässiger Weise und beeinträchtigen das Kristallisationsverhalten bei der Umwandlung des kristallisierbaren Ausgangsglases in die Glaskeramik, hier insbesondere zu Lasten schneller Keramisierungsgeschwindigkeiten. Außerdem wirken sich höhere Gehalte ungünstig auf die Zeit-/Temperaturbelastbarkeit der Glaskeramik aus. Die Summe der Alkalien $Na_2O$ + $K_2O$ soll mindestens 0,2, bevorzugt mindestens 0,4 Gew.-% betragen und maximal 1,5 Gew.-%, bevorzugt maximal 1,2 Gew.-%.

Die Summe der Erdalkalien CaO + SrO + BaO soll maximal 4 Gew.-%, bevorzugt mindestens 0,2 Gew.-% betragen.

Die genannten Alkalien und Erdalkalien reichern sich außer in der Restglasphase zwischen den Kristallen auch an der Oberfläche der Glaskeramik an. Beim Keramisieren bildet sich eine ca. 200 bis 1000 nm dicke glasige Oberflächenschicht, die nahezu frei ist von Kristallen und die an diesen Elementen angereichert und an Lithium abgereichert ist. Diese glasige Oberflächenschicht wirkt sich günstig auf die chemische Beständigkeit der Glaskeramik aus.

Die Zugabe an $P_2O_5$ kann bis zu 3 Gew.-% betragen und ist bevorzugt auf 1,5 % begrenzt. Die Zugabe von $P_2O_5$ ist günstig für die Entglasungsfestigkeit. Höhere Gehalte wirken sich ungünstig auf die Säurebeständigkeit aus.

$TiO_2$, $ZrO_2$ und $SnO_2$ sind als Keimbildner erforderlich. Bei der Keramisierung bilden sie während der Keimbildung Keime in hoher Dichte, die für das Aufwachsen der Hochquarz-Mischkristalle bei der Kristallisation als Unterlage dienen. Höhere Gehalte als in der Summe 6 Gew.-% verschlechtern die Entglasungsstabilität. Dies gilt besonders für die Komponente $SnO_2$, die auf Werte von weniger als 0,6 Gew.-% begrenzt ist. Höhere Gehalte führen zur Kristallisation von Sn-haltigen Kristallphasen an den Kontaktmaterialien (z.B. Pt/Rh) bei der Formgebung und sind unbedingt zu vermeiden.

Der $ZrO_2$-Gehalt ist auf 2 Gew.-%, bevorzugt 1,8 Gew.-% und weiter bevorzugt auf maximal 1,6 Gew.-% begrenzt, da höhere Gehalte das Einschmelzverhalten des Gemenges bei der Glasherstellung verschlechtern und die Entglasungsstabilität bei der Formgebung durch Bildung von $ZrO_2$- haltigen Kristallen beeinträchtigt werden kann. Der Mindestgehalt an $ZrO_2$ soll 0,5 Gew.-% und bevorzugt 0,8 Gew.-% betragen, um eine hohe Keramisierungsgeschwindigkeit zu begünstigen. Der $TiO_2$-Gehalt liegt zwischen 2,5 und 4,0 Gew.-%, bevorzugt mindestens 2,8 Gew.-%. Die Mindestmenge soll nicht unterschritten werden, damit eine schnelle Keimbildung für das Erzielen hoher Keramisierungsgeschwindigkeiten sichergestellt ist. Der Gehalt soll 4 Gew.-% nicht übersteigen, weil sonst die Entglasungsstabilität verschlechtert wird.

Überraschend wurde nun gefunden, dass $Fe_2O_3$-Gehalte ab 600 ppm, bevorzugt ab 700 ppm in Kombination mit eng spezifizierten Gehalten von $TiO_2$, $V_2O_5$ und $SnO_2$ den Transmissionsverlauf beeinflussen können. Da sich $Fe_2O_3$, speziell der Anteil an zweiwertigen $Fe^{2+}$ negativ auf die IR-Transmission auswirkt, soll der $Fe_2O_3$-Gehalt maximal 0,2 und bevorzugt maximal 0,18 Gew.-% betragen. Besonders bevorzugt ist ein $Fe_2O_3$-Gehalt von 0,08 - 0,15 Gew.-%.

Die Kombination der Farboxide $Fe_2O_3$ mit $V_2O_5$ und seinem Redox-Partner $SnO_2$ gestattet es, mit geringeren Mengen des kostspieligen und als Gefahrstoff eingestuften Färbemittels $V_2O_5$ auszukommen. Dabei werden die Anforderungen an die Transmission bei niedrigen Wellenlängen ab 450 nm und die anderen Forderungen wie spezifikationsgerechte Lichttransmission, Infrarot-Transmission, sowie die Transmission bei 630 nm eingehalten. Die Transmissionskurve wird gegenüber den bekannten mit Vanadiumoxid gefärbten Glaskeramiken im Bereich des sichtbaren Lichtes flacher. Um den Gehalt des teuren und als Gefahrstoff nicht unbedenklichen Färbemittels $V_2O_5$ zu reduzieren ist es unverzichtbar, dass der $Fe_2O_3$-Gehalt mindestens so hoch sein muss wie der $V_2O_5$-Gehalt und damit der Bedingung genügen muss

$$1 < Fe_2O_3 / V_2O_5 < 8.$$

Das Farboxid $Fe_2O_3$ ist also mengenmäßig das Hauptfärbemittel und bevorzugt ist der Gehalt doppelt so hoch wie der des $V_2O_5$.Dadurch ist es auch möglich, kostengünstigere Gemengerohstoffe einzusetzen.

Weitere Komponenten, die dazu beitragen den benötigten $V_2O_5$-Gehalt zu verringern sind $SnO_2$ und $TiO_2$. Für die erfindungsgemäße Einstellung der Transmission ist es daher erforderlich $V_2O_5$, $SnO_2$, $TiO_2$ und $Fe_2O_3$ in bestimmten engen Grenzen einzustellen. Insbesondere der $TiO_2$-Gehalt muss eine bestimmte Mindestmenge überschreiten.

Mit den erfindungsgemäßen $Fe_2O_3$-, $TiO_2$-, $V_2O_5$- und $SnO_2$-Gehalten ist es möglich, alle Anforderungen an den Transmissionsverlauf, wie spezifikationsgerechte Lichttransmission, hohe Infrarot-Transmission, sowie Anzeigefähigkeit für standardmäßige rote Leuchtdioden zusammen mit der gewünschten verbesserten Anzeigefähigkeit für andersfarbige Leuchtanzeigen zu erreichen.

Als weiteres wichtiges Ergebnis der Zugabe von $Fe_2O_3$ wurde gefunden, dass dies die Läuterung wesentlich unterstützt. In Kombination mit dem $SnO_2$ als Hauptläutermittel gibt auch das $Fe_2O_3$ Sauerstoff ab und wird dabei zum $Fe^{2+}$ reduziert. Der für die Läuterwirkung maßgebliche Umsatz steigt mit der Temperatur der Schmelze an. Eine Temperaturbehandlung der Schmelze von größer als 1700°C und weiter größer als 1750 °C liefert also hinsichtlich der Blasenqualität weiter verbesserte Ergebnisse. Damit sich die Zugabe von $Fe_2O_3$ als zusätzliches Läutermittel in Kombination mit $SnO_2$ besonders vorteilhaft auswirkt, sollte der Gehalt mindestens 20 % des $SnO_2$-Gehaltes betragen.

Für eine wirtschaftliche Herstellung ist eine schnelle Keramisierbarkeit des Ausgangsglases gewünscht. Dabei ist es notwendig, die Keimbildungs- und Keramisierungsgeschwindigkeit durch eine entsprechend gewählte Zusammensetzung zu erhöhen. Hierbei hat es sich als vorteilhaft erwiesen, die Gehalte der Keimbildner $TiO_2$ + $ZrO_2$ + $SnO_2$ zu erhöhen, um die Keimbildungsgeschwindigkeit anzuheben, während der Gehalt an $P_2O_5$ zu niedrigeren Werten gewählt werden muss.

Weiterhin sind beim Keramisieren auftretende Verzerrungen der Kochflächen ein begrenzender Faktor. Großtechnische Keramisierungsöfen haben eine gewisse Temperaturinhomogenität und daher ist es schwierig, die Temperatur an Ober- und Unterseite des kristallisierbaren Glases während der Kristallisation völlig gleichmäßig einzustellen. Geringe Temperaturunterschiede von wenigen °C führen zu früherer Kristallisation auf der Plattenseite mit der höheren Temperatur. Verbunden mit dem linearen Kristallisationsschrumpf von ca. 1 % kommt es dann zu den Verzerrungen. Handelsübliche Kochflächen sind üblicherweise auf eine Verzerrung von weniger als 0,1 % ihrer diagonalen Abmessung spezifiziert.

Um diese Verzerrung bei einem schnellen Keramisierungsprogramm zu minimieren, hat es sich als günstig erwiesen, den Anteil der Kristallphase bildenden Komponenten wie $Li_2O$, $SiO_2$ zu minimieren und den Anteil der Komponenten, die die Restglasphase der Glaskeramik bilden, wie die Alkalien $Na_2O$ und $K_2O$ sowie die Erdalkalien $CaO$, $SrO$, $BaO$ zu erhöhen. Der Anteil der Hochquarz-Mischkristallphase beträgt vorteilhafterweise weniger als 70 Gew.-% und liegt bei 60 bis 70 Gew.-%. Bei der Keramisierung befindet sich die Glaskeramikplatte auf einer ebenen Unterlagsplatte. Durch den erhöhten Anteil der Restglasphase und die Verringerung des Kristallphasenanteils werden entstandene Verzerrungen durch viskoses Fließen bei den hohen Temperaturen verringert, indem sich die Glaskeramikplatte auf der ebenen Unterlage anlegt.

Bevorzugt besitzt die erfindungsgemäße Kochfläche bezüglich schneller Keramisierbarkeit des Ausgangsglases eine Zusammensetzung der Glaskeramik, die in Gew.-% auf Oxidbasis im wesentlich besteht aus:

|  |  |
|---|---|
| $Li_2O$ | 3,2 - 4,2 |
| $Na_2O$ | 0,1 - 1 |

(fortgesetzt)

| | |
|---|---|
| K$_2$O | 0,1 - 1 |
| Σ Na$_2$O+K$_2$O | 0,2 - 1,5 |
| | |
| MgO | 0 - 1,5 |
| Σ CaO+SrO+BaO | 0,1 - 4 |
| ZnO | 0 - 2 |
| B$_2$O$_3$ | 0 - 1 |
| Al$_2$O$_3$ | 19 - 23 |
| SiO$_2$ | 60 - 68 |
| TiO$_2$ | 2,8 - 4 |
| ZrO$_2$ | 0,8 - 1,8 |
| P$_2$O$_5$ | 0 - 1,5 |
| SnO$_2$ | 0,1 - < 0,6 |
| Σ TiO$_2$+ZrO$_2$+SnO$_2$ | 4,4 - 6 |
| V$_2$O$_5$ | 0,01 - 0,05 |
| Fe$_2$O$_3$ | 0,07 - 0,18, |

mit der Bedingung:

$$2 < Fe_2O_3 / V_2O_5 < 6.$$

Unter einer schnellen Keramisierbarkeit wird eine thermische Behandlung zur Kristallisation der Glaskeramik mit einer Dauer von weniger als 2 Stunden, bevorzugt weniger als 80 Minuten verstanden.

Bei dem erfindungsgemäßen Verfahren zur Keramisierung wird das thermisch entspannte kristallisierbare Ausgangsglas innerhalb von 3 - 30 min auf den Temperaturbereich von etwa 680°C erhitzt. Die erforderlichen hohen Heizraten können großtechnisch in Rollenöfen realisiert werden. Dieser Temperaturbereich von etwa 680°C entspricht in etwa der Transformationstemperatur des Glases. Oberhalb dieser Temperatur bis etwa 800°C ist der Bereich mit hohen Keimbildungsraten. Der Temperaturbereich der Keimbildung wird über einen Zeitraum von 10 bis 30 Minuten durchfahren.

Danach wird die Temperatur des Kristallisationskeime enthaltenden Glases innerhalb von 5 bis 30 Minuten auf eine Temperatur von 850 bis 950°C, die sich durch hohe Kristallwachstumsgeschwindigkeiten der Hochquarz-Mischkristallphase auszeichnet, erhöht. Diese maximale Temperatur wird bis zu 20 Minuten gehalten. Dabei wird das Gefüge der Glaskeramik homogenisiert und die optischen, physikalischen und chemischen Eigenschaften eingestellt. Die erhaltene Glaskeramik wird bis 800°C mit Abkühlraten von ca 10°C/min und danach rasch auf Raumtemperatur abgekühlt.

Gemengerohstoffe, wie z.B. Bariumnitrat oder Bariumchlorid, die als Quelle für das BaO eingesetzt werden, sind unter Umweltaspekten nachteilig und erfordern besondere Vorsichtsmaßnahmen beim Einsatz. Außerdem erhöht BaO die Dichte der Glaskeramik und damit das Gewicht der Kochfläche. Um den BaO-Gehalt zu verringern oder bis auf Verunreinigungen ganz zu entfernen, hat es sich als günstig erwiesen, BaO durch die chemisch verwandten Erdalkalien CaO und SrO zu substituieren. Dabei sollen die Gehalte an CaO 0,2 bis 1 Gew.-% und an SrO 0,1 bis 1 Gew.-% betragen.

Für eine wirtschaftliche Herstellung soll das kristallisierbare Ausgangsglas gut schmelzbar sein und über eine hohe Entglasungsfestigkeit verfügen. Die Verarbeitungstemperatur soll dabei kleiner als 1320°C und bevorzugt kleiner als 1310 °C sein. Die obere Entglasungsgrenze soll mindestens 30°C, bevorzugt mindestens 50°C unter der Verarbeitungstemperatur liegen. Hinsichtlich der Entglasung kritische Kristallphasen sind Mullit (Aluminiumsilikat), Baddeleyt (ZrO$_2$) sowie Li$_2$O-Al$_2$O$_3$-SiO$_2$-Mischkristalle und SnO$_2$-enthaltende Kristallphasen. Hinsichtlich der Entglasungsfestigkeit sind demnach höhere Gehalte an Li$_2$O, Al$_2$O$_3$, SiO$_2$, ZrO$_2$ und SnO$_2$ nachteilig. Um die Viskosität der Glasschmelze abzusenken hat es sich als notwendig erwiesen, den Gehalt an SiO$_2$, Al$_2$O$_3$, ZrO$_2$ zu verringern, während die Gehalte an Alkalien Na$_2$O + K$_2$O, Erdalkalien CaO + SrO + BaO bei höheren Werten gewählt werden.

Bevorzugt besitzt diesbezügliche eine erfindungsgemäße Kochfläche folgende Zusammensetzung in Gew.-% auf Oxidbasis:

| | |
|---|---|
| Li$_2$O | 3,2 - 4,0 |
| Na$_2$O | 0,2 - 1 |

(fortgesetzt)

| | |
|---|---|
| $K_2O$ | 0,1 - 1 |
| $\sum Na_2O+K_2O$ | 0,4 - 1,2 |
| MgO | 0,1 - 1,2 |
| CaO | 0,2 - 1 |
| SrO | 0 - 1 |
| BaO | 0 - 3 |
| $\sum CaO+SrO+BaO$ | 0,2 - 4 |
| ZnO | 0 - 1,8 |
| $B_2O_3$ | 0 - 1 |
| $Al_2O_3$ | 19 - 22 |
| $SiO_2$ | 62 - 67 |
| $TiO_2$ | 2,8 - 4 |
| $ZrO_2$ | 0,5 - 1,6 |
| $P_2O_5$ | 0 - 1,5 |
| $SnO_2$ | 0,1 - 0,5 |
| $\sum TiO_2+ZrO_2+SnO_2$ | 4,2 - 6 |

| | |
|---|---|
| $V_2O_5$ | 0,01 - 0,05 |
| $Fe_2O_3$ | 0,08 - 0,15, |

mit der Bedingung:

$$2 < Fe_2O_3 / V_2O_5 < 6.$$

Es hat sich gezeigt, dass gezielt reduziert eingestellte Bedingungen des kristallisierbaren Ausgangsglases, die bei der Schmelze vorgenommen werden, eine günstige Wirkung auf den gewünschten Transmissionsverlauf der Glaskeramik haben.

Die genannten unterschiedlichen Anforderungen an die Transmission können dann noch besser miteinander vereinbart werden. Der Gleichgewichts-Sauerstoffpartialdruck $pO_2$ von 1 bar soll dabei bei einer Temperatur von >1580°C, bevorzugt von >1640°C erreicht werden. Je höher diese Temperatur ist, desto reduzierender ist das erhaltene Glas eingestellt und die Anteile der niedrigen Wertigkeiten bei den polyvalenten Komponenten wie z. B. $Sn^{2+}$, $Fe^{2+}$, $Ti^{3+}$ sind erhöht. Dies verstärkt die Farbwirkung des Vanadiumoxids.

Bei den erfindungsgemäßen Temperaturen für den Gleichgewichts-Sauerstoffpartialdruck $pO_2$ ist es möglich, mit geringen $V_2O_5$-Gehalten den erfindungsgemäßen Transmissionsverlauf einzustellen. Es werden weniger als 0,04 und bevorzugt weniger als 0,03 Gew.-% benötigt. Da Vanadin auch ein kostspieliger Rohstoff ist, ist es wirtschaftlich vorteilhaft, den Gehalt an $V_2O_5$ zu minimieren.

Dieser Gleichgewichts-Sauerstoffpartialdruck $pO_2$ kann bei der Schmelze durch Zusatz von Reduktionsmitteln in pulvriger und/oder flüssiger Form zum Ausgangsgemenge eingestellt werden. Dafür eignen sich Metalle, Kohlenstoff und/oder aufoxidierbare Kohlenstoff- bzw. Metallverbindungen wie z.B. Al- oder Si-Pulver, Zucker, Holzkohle, SiC, TiC, MgS, ZnS. Auch gasförmige Reduktionsmittel, wie z.B. Formiergas sind geeignet. Die genannten Reduktionsmittel sind geeignet den $pO_2$ der Schmelze zu senken und den gewünschten Wert für den Gleichgewichts-Sauerstoffpartialdruck einzustellen.

Eine bevorzugte Möglichkeit den Gleichgewichts-Sauerstoffpartialdruck $pO_2$ einzustellen ist die Temperaturbehandlung der Glasschmelze bei Temperaturen von größer als 1700°C, bevorzugt größer als 1750°C. Diese Temperaturbehandlung kann vorteilhafterweise als Hochtemperaturläuterung ausgeführt werden, die es gestattet, großtechnisch die gewünschten niedrigen Blasenzahlen von < 10, bevorzugt < 5 Blasen/kg zu erreichen. Die Läuterwirkung ist deshalb so ausgeprägt, weil das $SnO_2$ ein Läutermittel ist, das den zum Läutern erforderlichen Sauerstoff bei hohen Temperaturen oberhalb 1700°C verstärkt abgibt.

Dies gilt auch für das zusätzliche Läutermittel $Fe_2O_3$. Die Kombination der beiden liefert also weiter verbesserte Blasenqualitäten, bzw. erlaubt höhere Glasdurchsätze in großtechnischen Schmelzwannen. Der Beitrag des $Fe_2O_3$ zur Läuterung wird signifikant bei Gehalten von mindestens 20 Gew.-% des eingesetzten Läutermittels $SnO_2$. Man kann

somit den Vorteil einer guten Läuterwirkung mit dem erfindungsgemäßen Vorteil der Einstellung des Gleichgewichts-Sauerstoffpartialdrucks $pO_2$ auf den bevorzugten Wert verbinden. Der Mechanismus ist dabei der, dass bei den hohen Temperaturen $O_2$- Läuterblasen gebildet werden, die in der Glasschmelze aufsteigen und diese verlassen, wobei andere gelöste Fremdgase ebenfalls entfernt werden. Bei ausreichenden Zeiten, wenn sämtlicher bei der Läuterung freigesetzter Sauerstoff aus der Schmelze entfernt wird, entspricht die Temperatur bei der der Gleichgewichts-Sauerstoffpartialdrucks $pO_2$ den Wert 1 bar hat der maximalen Temperatur bei der Behandlung. Da dieses Gleichgewicht bei der großtechnischen Glasschmelze und den verwendeten Durchsätzen aus Zeitgründen nicht ganz erreicht wird, verbleibt immer eine gewisse Menge von Sauerstoff-Läuterblasen in der Schmelze und wird beim Abkühlen resorbiert. Des Weiteren wird in geringem Maße Sauerstoff aus der Umgebung beim Abkühlen der Schmelze von der Maximaltemperatur auf die Formgebungstemperatur VA wieder aufgenommen. Dadurch bedingt, entspricht die gemessene Temperatur des Gleichgewichts-Sauerstoffpartialdrucks $pO_2$ von 1 bar nicht der Maximaltemperatur bei der Schmelze, sondern liegt darunter. Es sei denn man setzt reduzierende Zusätze zu.

Vorzugsweise sind unter der erfindungsgemäßen Kochfläche mit verbesserter farbiger Anzeigefähigkeit anstelle oder in Ergänzung zu den üblichen roten Anzeigen eine oder mehrere andersfarbige Anzeigen, wie blaue, grüne, gelbe, orange oder weiße angeordnet. Die farbigen Anzeigen bestehen aus Licht emittierenden elektronischen Bauteilen, meist aus Leuchtdioden. Die Unterseite der Kochfläche kann die üblichen Noppen besitzen oder glatt ausgeführt sein.

Bei einer vorteilhaften Weiterbildung der Erfindung wird der Anwender durch die Verwendung von Symbolen oder Text bei der Auswertung des Fehlerzustandes unterstützt.

Beispielsweise können auf der Kochplatte bzw. im Kochfeld je ein Temperaturzustandsanzeigefeld und ein Fehlerzustandsanzeigefeld vorhanden sein, wobei diese beiden Felder jeweils mit einem eindeutigen Symbol (Hitze = Flammenzeichen, Fehler = Achtung-Zeichen (Dreieck mit Ausrufezeichen)) gekennzeichnet werden. Ferner ist es - insbesondere für Verwender mit Farbsehschwächen - möglich, die einzelnen Stufen ebenfalls mit Symbolen zu kennzeichnen. So kann beispielsweise ein Temperaturanzeigefeld, welches rot leuchtet zudem im Anzeigenfeld noch über eine große Flamme verfügen. Das entsprechende orange Anzeigenfeld über eine kleine Flamme und das blaue Feld über kein Symbol oder ein die Kälte symbolisierendes Symbol verfügen. Bei der Verwendung von Ampelfarben zur Anzeige von Fehlerzuständen können beispielsweise die von Fußgängerampeln her bekannten Männchen (rot = Stehen, grün = Gehen) verwendet werden. Selbstverständlich können die Anzeigen zusätzlich zu einer Farbe oder einem Symbol blinken und insbesondere je nach Fehler- und/oder Temperaturintensität schneller oder langsamer oder in unterschiedlichen Rhythmen blinken.

Die Beheizung der Kochfläche kann durch Strahlungs-Heizkörper, Halogen-Heizkörper, Induktionsbeheizung oder mit Gas erfolgen. Es sind alle Formen von Anzeigen, punktuelle wie flächige möglich.

Die Kochfläche kann dabei nicht nur als ebene Platte ausgeformt sein, sondern auch dreidimensional verformte wie z.B. abgekantete, gewinkelte oder gewölbte Platten können verwendet werden. Die Platten können rechtwinklig oder in anderen Formen vorliegen, sowie neben ebenen Bereichen dreidimensional verformte Bereiche wie z.B. Woks enthalten.

Die vorliegende Erfindung wird anhand von Beispielen nachfolgend weiter verdeutlicht.

Es zeigen:

Tabelle 1:    Zusammensetzung und Eigenschaften kristallisierbarer Ausgangs- und Vergleichsgläser und

Tabelle 2:    Keramisierungsbedingungen und Eigenschaften erfindungsgemäßer Glaskeramiken und Vergleichsglaskeramiken.

Figur 1    ein Diagramm, wobei der Sauerstoffpartialdruck über die Temperatur für ein erfindungsgemäßes Glas aufgetragen ist;

Figur 2    zwei Diagramme, die den Transmissions-Verlauf erfindungsgemäßer Glaskeramiken zeigen;

Figur 3    eine Draufsicht auf ein Kochfeld mit erfindungsgemäßen Temperatur- und Fehlerzustandsinformationsfeldern;

Figur 4    eine weitere Ausführungsform der Anordnung der Felder;

Figur 5    eine weitere Ausführungsform der Felder und

Figur 6    beispielhaft die Anordnung von Anzeigen in einem Anzeigenfeld mit zusätzlichen Symbolen.

Für einige Ausführungsbeispiele sind in Tabelle 1 Zusammensetzungen und Eigenschaften der kristallisierbaren Ausgangsgläser aufgeführt. Dabei handelt es sich bei den Gläsern 1 bis 12 um erfindungsgemäße Gläser und bei dem Glas 13 um ein Vergleichsglas außerhalb der vorliegenden Erfindung, dessen Zusammensetzung der kommerziellen Kochflächen-Glaskeramik Ceran Suprema® der SCHOTT AG entspricht.

Aufgrund von typischen Verunreinigungen in den verwendeten großtechnischen Gemengerohstoffen addieren sich die Zusammensetzungen nicht genau zu 100 Gew.-%. Typische Verunreinigungen, auch wenn nicht absichtlich in die Zusammensetzung eingeführt sind F, Cl, B, P, Rb, Cs, Hf, die üblicherweise weniger als 0,05 Gew.-% betragen. Sie werden oft über die Rohstoffe für die chemisch verwandten Komponenten eingeschleppt, so z.B. Rb und Cs über die Na-, bzw. K- Rohstoffe, oder Sr über den Ba-Rohstoff und umgekehrt.

Der Wassergehalt der Gläser beträgt 0,03 - 0,05 mol/l, entsprechend $\beta$OH-Werten von 0,32 bis 0,53 mm$^{-1}$.

In Tabelle 1 sind auch die Eigenschaften im glasigen Zustand, wie z. B. Transformationstemperatur Tg, Verarbeitungstemperatur $V_A$, Entglasungstemperatur, sowie die Dichte aufgeführt. Bei Gläsern gleicher Zusammensetzung, bei denen die Läutertemperatur variiert wurde, sind diese Eigenschaften gleich.

Zur Messung der Entglasungstemperatur werden die Gläser in Pt/Rh10-Tiegeln aufgeschmolzen. Anschließend werden die Tiegel für 5 Stunden bei verschiedenen Temperaturen im Bereich der Verarbeitungstemperatur $V_A$ gehalten. Die oberste Temperatur bei der die ersten Kristalle an der Kontaktfläche der Glasschmelze zur Tiegelwand auftreten bestimmt die Entglasungstemperatur.

Weiter sind in Tabelle 1 die Maximaltemperatur der Schmelze und die zugehörige Zeit, sowie die gemessene Temperatur aufgeführt bei der der $pO_2$ den Wert 1 bar erreicht. Die $pO_2$-Messung wurde in bekannter Weise an den wieder aufgeschmolzenen Gläsern als Funktion der Temperatur durchgeführt und die Temperatur für den Gleichgewichts-Sauerstoffpartialdruck $pO_2$ = 1 bar bestimmt. Bei $pO_2$-Messungen ist der $pO_2$ eine Funktion der Temperatur und hängt reversibel von dieser ab, solange kein Sauerstoff mit der Umgebung ausgetauscht wird.

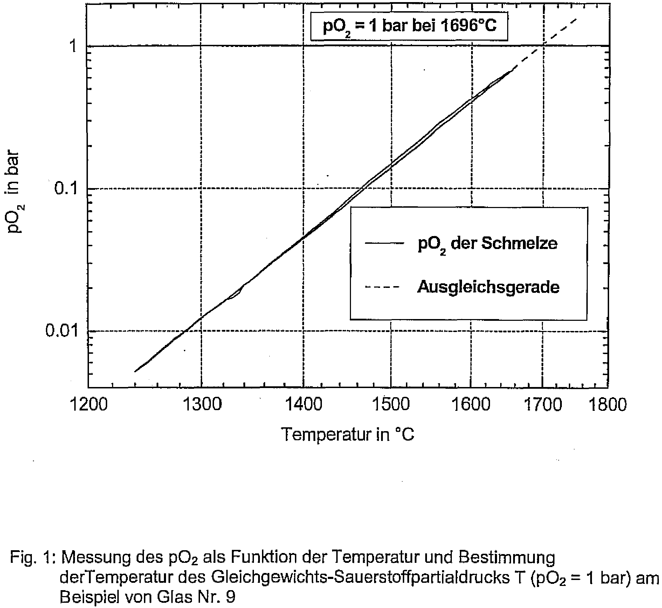

Fig. 1 zeigt die Messung des $pO_2(T)$ für das Glas Nr. 9 und die Bestimmung der charakteristischen Temperatur T ($pO_2$ = 1 bar). Da die Glasschmelze bei hohen Temperaturen nahe bei der Temperatur des Gleichgewichts-Sauerstoffpartialdrucks T ($pO_2$ =1 bar) bereits Sauerstoff an die Umgebung abgibt, führt dies dazu, dass der Wert dieser charakteristischen Temperatur verändert wird. Bei der Messung wurde deshalb die Temperatur des Glases bis auf ca. 40°C unter der charakteristischen Temperatur T ($pO_2$ = 1 bar) erhöht und der Wert durch Extrapolation der gemessenen Gerade log $pO_2$ proportional zu 1/T bestimmt (siehe Fig.1).

Die Ausgangsgläser von Tabelle 1 wurden aus in der Glasindustrie üblichen Rohstoffen bei Temperaturen von ca. 1620°C, 4 Stunden eingeschmolzen. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1550°C, 30 Minuten durch Rühren homogenisiert. Nach dieser Homogenisierung wurden verschiedene Temperaturbehandlungen zur Läuterung vorgenommen. Die maximalen Schmelz- bzw. Läutertemperaturen und -zeiten finden sich in Tabelle 1.

Die Gläser Nr 2, 3, 5, 6, 8, 10, 11, 13 wurden für 2 Stunden bei 1640°C geläutert.

Anschließend wurden Stücke von ca. 140x100x30 mm$^3$ Größe gegossen.

Die Gläser 1, 4, 7, 9, 12 und das Vergleichsglas wurden einer Hochtemperaturläuterung mit den in Tabelle 1 angegebenen Temperaturen und Zeiten unterzogen um gute Blasenqualitäten zu erreichen und um reduzierendere Bedingungen entsprechend der angegebenen Temperatur T ($pO_2$ = 1 bar) einzustellen. Vor Ausgießen der geläuterten Glasschmelze wurde die Temperatur auf etwa 1700°C abgesenkt. Die Gussstücke wurden zur Vermeidung von Spannungen in einem Kühlofen, beginnend bei einer Temperatur von etwa 20°C unter der Transformationstemperatur der Gläser, auf Raumtemperatur abgekühlt. Aus den Gussstücken wurden die Prüfmuster für die Messungen präpariert.

Der positive Einfluss der Hochtemperaturläuterung hinsichtlich der Blasenqualität zeigt sich auch bei den Laborschmelzen. Die absoluten Werte der Blasenzahlen in den Laborschmeizen liegen technisch bedingt (anderes Oberflächen- zu Volumenverhältnis bei Laborschmelzen) um Größenordnungen über denen einer großtechnischen Schmelze. Aussagefähig sind die relativen Unterschied. Die konventionell um 1640°C geläuterten Schmelzen haben ca. 1000 bis 5000 Blasen/kg Glas, bei Hochtemperaturläuterung ca. 200 bis 2000 Blasen/kg. Bei gleicher Zusammensetzung liefert die Hochtemperaturläuterung die besseren Werte. Großtechnisch werden bei diesen Werten die gewünschten Qualitäten von weniger als 10 Blasen/kg Glas erreicht.

Bei den Gläsern 1, 2, 3 sowie 7, 8 und 9, 10 handelt es sich um gleiche Zusammensetzungen, die unterschiedlich geschmolzen wurden. Glas 1 wurde einer Hochtemperturläuterung unterzogen. Glas 3 wurde durch Zusatz von 1 Gew.-% Zucker zum Gemenge gegenüber dem bei gleichen Temperaturen geläuterten Glas Nr. 2 reduzierender eingestellt. Demzufolge unterscheiden sich auch die Temperaturen für den Gleichgewichts-Sauerstoffpartialdruck. Aufgrund der damit verknüpften unterschiedlichen, reduzierenden Bedingungen der kristallisierbaren Ausgangsgläser unterscheiden sich bei gleichen Keramisierungsbedingungen die Transmissionswerte der erhaltenen Glaskeramiken. Bei niedrigen Maximaltemperaturen der Schmelze benötigt man höhere Anteile an $V_2O_5$ oder höhere Keramisierungstemperaturen um die Transmissionswerte anzugleichen.

Die Gläser 1, 4 und das Vergleichsglas 12, sowie Scherben der kommerziell produzierte Glaskeramik Ceran Color® wurden nach der Läuterung und Abstehen bei 1600°C, 50 h in einem 14 l fassenden Pt/Rh10- Tiegel mit einer Laborwalzanlage zu kochflächentypischen Platten ausgeformt. Die Laborwalze besteht aus verkürzten Original-Fertigungswalzen.

Die Unterwalze ist für die Herstellung einer gebräuchlichen genoppten Kochflächenunterseite strukturiert. Aus dem erhaltenen Glasband von ca. 200 mm Breite, 4 mm Dicke und 2 m Länge werden nach einer Kühlung zum Abbau von Spannungen die Prüfmuster für die Messungen und Platten der Abmessung 18 cm x 18 cm x 4 mm für die Untersuchungen zur Ebenheit bei schneller Keramisierung präpariert. Die Platten wurden in einem Laborofen mit homogener, steuerbarer Ober- und Unterhitze auf einer ebenen keramischen Unterlagsplatte keramisiert. Es wurde mit 10°C/min auf 750°C, Haltezeit 15 min aufgeheizt. Dann wurde mit 4°C/min auf 900°C, Haltezeit 15 min weiter erhitzt und schnell auf Raumtemperatur abgekühlt. Während des gesamten Programms war die obere Temperatur im Ofen gegenüber der Unterseite um 6°C erhöht. Dadurch wurden die Glaskeramikplatten gezielt domartig verformt. Die Abweichung von der Ebenheit für das Vergleichsglas Nr. 13 betrug 2,1 $\pm$ 0,2 mm (6 Versuche), bei Ceran Color® 0,6 $\pm$ 0,1 mm (4 Versuche) und bei Glas Nr. 1 und Nr. 4 für beide 0,5 $\pm$ 0,1 mm (3 Versuche). Da für das großtechnisch produzierte Glaskeramikmaterial Ceran Color® gezeigt ist, dass es sich in weniger als 80 min mit der geforderten Ebenheit keramisieren lässt, ist dies durch den relativen experimentellen Vergleich auch für die erfindungsgemäßen Gläser gezeigt.

Die Tabelle 2 zeigt die Keramisierungsbedingungen und Eigenschaften der erhaltenen Glaskeramiken und der Vergleichskeramiken 2, 4,17, außerhalb der Erfindung. Die Keramisierungen der Ausgangsgläser erfolgte mit den folgenden Temperatur/Zeit-Programmen, die Werte für $T_{max}$ und $t_{max}$ sind in der Tabelle 2 angegeben:

Keramisierungsprogramm 1:

    a) Aufheizen innerhalb von 15 Minuten von Raumtemperatur auf 680°C;
    b) Temperaturerhöhung von 680 auf 800°C innerhalb von 34,5 min, dabei Aufheizen mit 10°C/min auf 750°C, Haltezeit von 15 min bei 750°C, Aufheizen mit 4°C/min auf 800 °C;
    c) Temperaturerhöhung von 800°C auf $T_{max}$ und Haltezeit $t_{max}$ mit Heizrate 4°C/min;
    d) Abkühlen auf 800°C mit 10°C/min, dann schnelle Abkühlung auf Raumtemperatur.

Keramisierungsprogramm 2:

    a) Aufheizen innerhalb von 5 Minuten von Raumtemperatur auf 680°C;

    b) Temperaturerhöhung von 680 auf 800°C innerhalb von 19 min, dabei Aufheizen mit 10°C/min auf 730°C, weiteres Aufheizen mit 5°C/min auf 800 °C;

    c) Temperaturerhöhung von 800°C auf $T_{max}$ und Haltezeit $t_{max}$ mit Heizrate 5°C/min;

    d) Abkühlen auf 800°C mit 10°C/min, dann schnelle Abkühlung auf Raumtemperatur.

Bei den Vergleichsglaskeramiken, Beispiel 2 und 4 führen die eingestellten $pO_2$-Werte im Ausgangsglas zu nicht erfindungsgemäßer Lichttransmission. Dies zeigt im Vergleich zu Beispiel 1 den Einfluss des eingestellten Redoxzustandes, da die Beispiele mit gleichen Keramisierungsbedingungen hergestellt wurden.

Dies kann durch Anpassung der Keramisierungsbedingungen korrigiert werden (Beispiel 3 und 5). Die Ausgangsgläser Nr. 1, 2 und 3 der Beispiele 1 bis 5 besitzen gleiche Zusammensetzung und unterscheiden sich nur in dem bei der Schmelze eingestellten Redoxzustand.

Die Werte für die mittlere Kristallitgröße und den Anteil der Hochquarz-Mischkristallphase wurden mittels Röntgenbeugung bestimmt.

Die Beispiele verfügen aufgrund ihres Gehaltes an Hochquarz-Mischkristall als vorherrschender Kristallphase über die gewünschten sehr niedrigen Werte der thermischen Ausdehnung, gemessen im Temperaturbereich zwischen Raumtemperatur und 700°C. Die für die Erfindung charakteristischen Werte für die Transmission bei den verschiedenen Wellenlängen, sowie für die Lichttransmission, gleichbedeutend mit "brightness" Y, sind in der Tabelle aufgeführt. Die Werte wurden an polierten Platten mit der für Kochflächen typischen Dicke von 4 mm bestimmt. Die optischen Messungen erfolgten mit Normlicht C, 2 Grad.

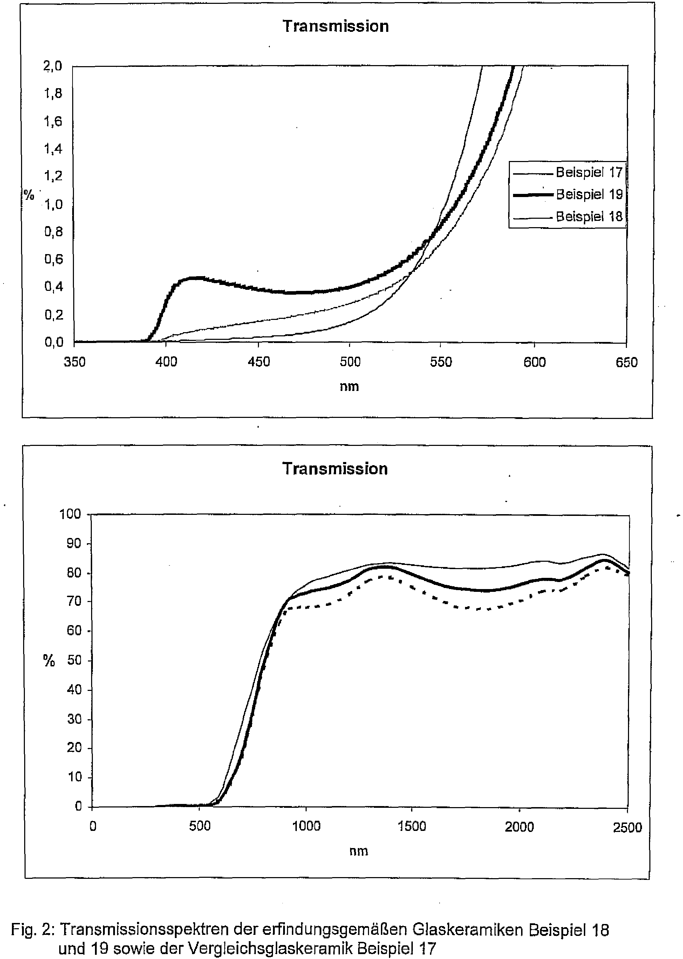

Bei einem zusätzlichen Beispiel Nr. 18 wurde eine Zusammensetzung gemäß Glas Nr. 1 großtechnisch erschmolzen und durch Hochtemperaturläuterung bei ca. 1770°C, 15 min wurde eine Temperatur für den Gleichgewichts-Sauerstoffpartialdruck $pO_2$ = 1 bar von 1610°C eingestellt. Die Blasenqualität dieses Glases war hervorragend und betrug < 3 Blasen/kg Glas. Es wurde bei der Formgebung ein genopptes Glasband von 4 mm Dicke hergestellt und zur Vermeidung von Spannung in einem Kühlofen abgekühlt. Aus diesem Glasband wurden Kochflächen der Größe 500 x 500 x 4 mm geschnitten und in einem großtechnischen Rollenofen keramisiert. Das Keramisierungsprogramm entsprach Programm 2 (Tabelle 2) und die kristallisierbaren Glasplatten befanden sich auf einer keramischen ebenen Unterlagsplatte. Die erhaltenen Glaskeramiken verfügten über eine sehr gute Ebenheit von < 0,1 % in ihren Diagonalabmessungen. Die Transmissionskurve dieser erfindungsgemäßen Glaskeramik ist in Fig. 2, der Vergleichsglaskeramik von Beispiel 17 und dem erfindungsgemäßen Beispiel 19 gegenübergestellt. In dem für die Erfindung wesentlichen Wellenlängenbereich im sichtbaren Licht von 400 bis 600 nm zeigt sich der für die höhere Anzeigefähigkeit vorteilhafte Transmissionsverlauf der erfindungsgemäßen Glaskeramik bei Werten oberhalb 0,1 % und die gute UV-Blockung unterhalb 350nm.

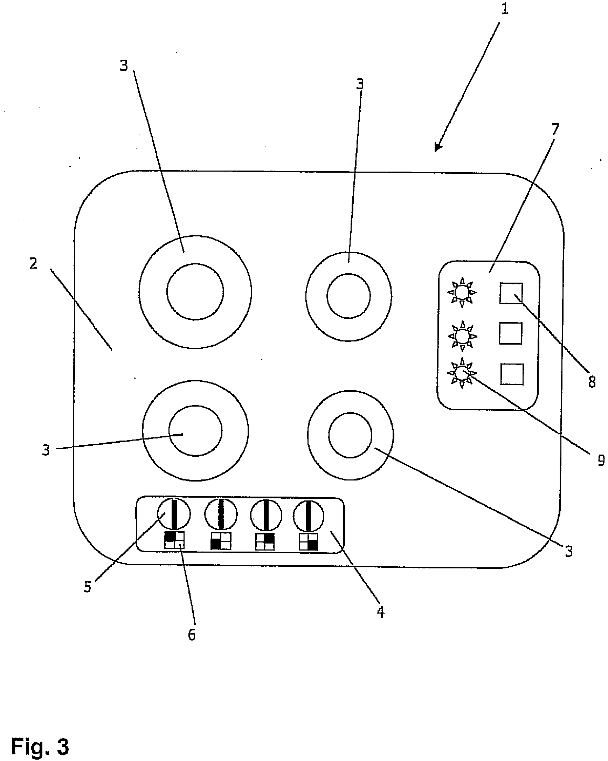

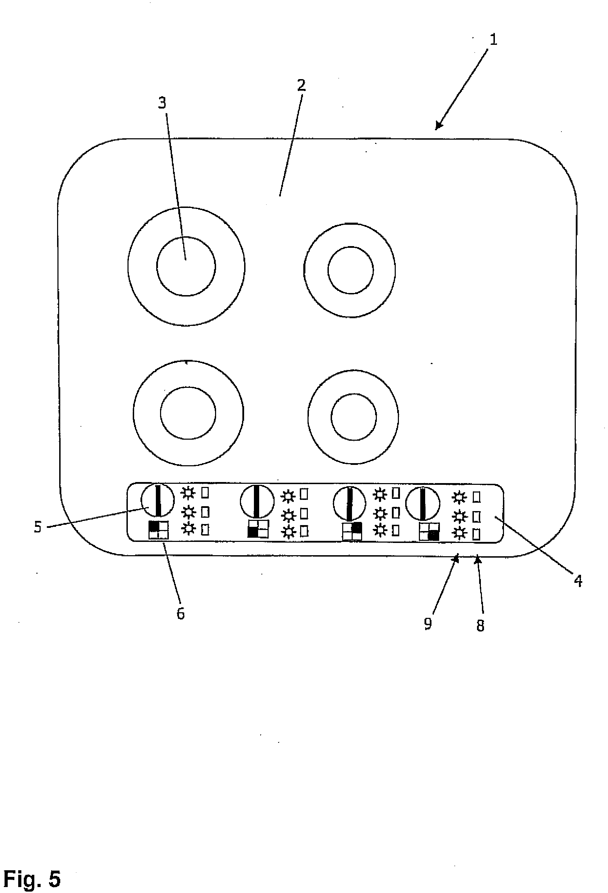

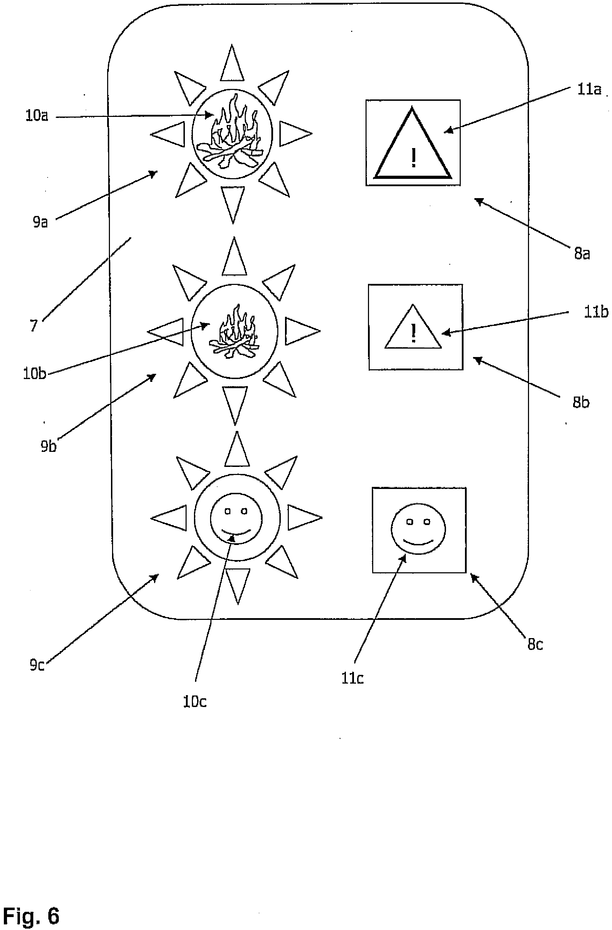

In den Figuren 3 bis 6 ist ein erfindungsgemäßes Kochfeld dargestellt, das auf der Basis einer der vorstehend beschriebenen Glaskeramiken hergestellt ist. Wie diese Darstellungen zeigen, besitzt das Kochfeld beispielsweise eine flächige Glaskeramikplatte 2 mit runden Kochstellen 3, im vorliegenden Beispiel vier Kochstellen 3.

Im Randbereich der Platte 2 ist zudem ein Betätigungsfeld 4 vorhanden. Das Betätigungsfeld 4 umfasst für jede Kochplatte 3 einen Drehschalter 5. Im vorliegenden Beispiel sind somit vier Drehschalter 5 vorhanden, wobei die Drehschalter 5 in bekannter Weise ausgebildet sind und die Kochflächen entweder stufenlos oder mit Stufen bzgl. der Heizleistung betätigen können. Zudem sind Kennfelder 6 vorhanden, welche den Verwender über einfache Symbolik anzeigen, zu welcher Kochstelle 3 der jeweilige Schalter 5 gehört.

Zudem ist ein Sicherheits- und Warnfeld 7 in einem Seitenbereich der Platte 2, vorzugsweise in einem anderen Seitenbereich der Platte 2 vorgesehen.

Das Sicherheits- und Warnfeld 7 umfasst beispielsweise 2 Reihen mit Anzeigen. Vorhanden sind Anzeigen 8, beispielsweise für einen Fehler des Gerätes und Anzeigen 9, die einen Temperaturzustand anzeigen. Im in Figur 1 gezeigten Beispiel sind drei untereinander angeordnete Anzeigen 8 für Fehler des gesamten Geräts und danebenliegend drei untereinander angeordnete Anzeigen für den Temperaturzustand einer der Kochstellen 3 angeordnet. Bei dieser Ausführungsform wird dem Verwender somit mitgeteilt, dass eine der Flächen ggf. in einem erhöhten Temperaturzustand ist und/oder das Gerät oder Geräteteile Fehler aufweisen.

Bei einer weiteren vorteilhaften Ausführungsform (Figur 2) sind ebenfalls vier Kochstellen 3 in der Glaskeramikplatte 2 angeordnet, wobei das Betätigungsfeld 4 ebenfalls über vier Drehschalter 5 verfügt und für jeden Drehschalter 5 ein Symbol bzgl. der Zuordnung des Drehschalters 5 vorhanden ist. Neben jedem der Drehschalter 5 sind Anzeigeelemente 9 für den Temperaturzustand vorhanden, so dass bei dieser Ausführungsform der Temperaturzustand jeder Kochstelle 3 benachbart zu deren Drehschalter 5 und der zu der Platte gehörenden Symbolik angeordnet ist. Im Sicherheits- und Warnfeld 7 sind drei übereinander liegende Fehleranzeigen 8 vorhanden, die für das gesamte Gerät einen Fehler oder den Normalzustand anzeigen können.

Bei einer weiteren vorteilhaften Ausführungsform (Figur 3) wird auf ein separates Sicherheits- und Warnfeld 7 verzichtet, wobei die Anzeigen 9 zum Darstellen eines Temperaturzustandes und die Fehleranzeigen 8 jeweils für eine Kochstelle 3 neben dem jeweiligen Drehschalter 5 angeordnet sind. Somit werden dem Verwender der Temperaturzustand jeder Kochstelle 3 und der Fehlerzustand jeder Kochstelle 3 individuell angezeigt.

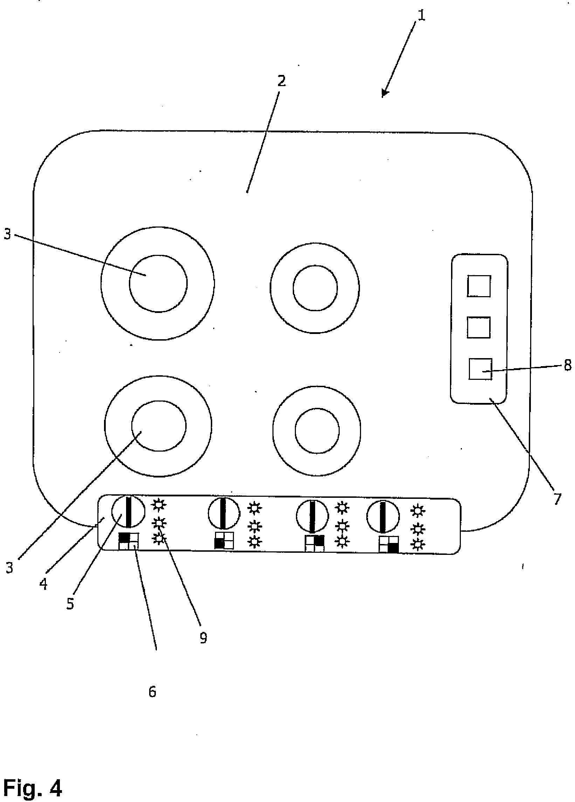

Wenn für die Anzeige eines kritischen Temperaturzustandes und/oder eines Gerätefehlers zu farblichen Kennzeichnungen Symbole hinzutreten (Figur 4), sind in einem Sicherheits- und Warnfeld 7 beispielsweise in zwei Spalten je drei Temperaturanzeigen 9 und drei Fehleranzeigen 8 angeordnet. Innerhalb der Temperaturanzeige können beispielsweise in einer Anzeige 9a für eine hohe kritische Temperatur ein entsprechendes Flammensymbol 10a vorhanden sein und in einer Anzeige 9b für eine hohe aber nicht kritische Temperatur ein verkleinertes Flammenzeichen 10b vorhanden sein.

In den Anzeigenfeldern 8a, 8b, 8c für einen Fehlerzustand kann in einem Feld 8a für die Anzeige eines kritischen Fehlerzustandes ein Symbol 11a, das einen kritischen Fehler anzeigt, vorhanden sein. In einem Anzeigefeld 8b zur Anzeige eines Fehlers, der die Betriebssicherheit beispielsweise nicht beeinträchtigt, kann ein entsprechendes kleineres oder weniger deutliches Symbol 11 b vorhanden sein.

In den Anzeigen 8c, 9c, die jeweils einen ordnungsgemäßen Zustand bzw. kein Vorhandensein einer kritischen Temperatur anzeigen, können entsprechende Symbole 10c, 11c vorhanden sein, welche dem Benutzer, ohne nachzudenken anzeigen, dass sich das Gerät in einem ordnungsgemäßen unkritischen Zustand befindet.

Die Zeichenanordnung gemäß Figur 4 kann selbstverständlich auf die drei Ausführungsbeispiel, übertragen werden, so dass die entsprechenden Signale auch neben den Drehschaltern oder anderen Orten der Glaskeramikplatte 2 angeordnet sind.

Bei einer weiteren Ausführungsform (nicht gezeigt) ist jeweils nur eine Anzeige 8 für einen kritischen Fehlerzustand und jeweils nur eine Anzeige 9 für einen Temperaturzustand vorhanden. Diese Anzeigen 8, 9 verfügen über farbige Leuchtelemente, welche die Anzeige entweder gestuft in verschiedenen Farben oder stufenlos in verschiedenen Farben leuchten lassen können.

Hierbei können jeweils eine einzige Anzeige 8 und eine einzige Anzeige 9 in einem Sicherheits- und Warnfeld 7 angeordnet sein. Es ist jedoch auch möglich, lediglich ein Anzeigelement 8 und für jeden Drehschalter 5 ein Anzeigeelement 9 vorzusehen.

Ebenso können selbstverständlich jeder Kochfläche, d.h. auch jedem Drehschalter 5 je eine Anzeige 8, 9 zugeordnet sein.

Bei einer weiteren vorteilhaften Ausführungsform (nicht gezeigt) können die Temperaturanzeige 9 bzw. die Fehleranzeige 8 auch in Form von entlang eines Kreises angeordneten Leuchten bzw. Segmenten unterschiedlicher Farbe vorhanden sein, wobei die Farben beispielsweise in einem unkritischen Bereich grün (für Fehlerfreiheit) und blau (für keine hohe Temperatur) sind, und entlang des Kreises steigende Temperatur und/oder steigende Fehlerquote mit sich ändernden Farben angezeigt werden. In gleicher Weise können diese Temperaturverläufe auch entlang eines Balkens angezeigt werden.

Bei der Erfindung ist von Vorteil, dass für den Verwender einfache und intuitiv zu erfassende Anzeigen geschaffen werden, die ihm ermöglichen, ohne großes Nachdenken, die Gefahren, die von Hitze oder Wärme ausgehen oder von Fehlern des Gerätes ausgehen, zu erfassen. Hierdurch wird eine deutliche Steigerung der Anwendungssicherheit erreicht. Ferner werden die Ergonomie und das Vertrauen in das Gerät gesteigert.

Die Erfindung wurde anhand eines Kochfeldes, insbesondere eines Kochfeldes mit einer Glaskeramikplatte offenbart. Gleichwohl ist die Erfindung mit gleichem Erfolg auf jede Form von Elektrogeräten, insbesondere im Haushalt anwendbar.

**Patentansprüche**

1. Transparente, eingefärbte Kochfläche (1) mit verbesserter farbiger Anzeigefähigkeit, bestehend aus einer Glaskeramik mit Hochquarz-Mischkristallen als vorherrschender Kristallphase, wobei die Glaskeramik, bis auf unvermeidliche Spuren, keines der chemischen Läutermittel Arsenoxid und/oder Antimonoxid enthält,
   **dadurch gekennzeichnet,**
   **dass** die Glaskeramik Transmissionswerte von größer als 0,1 % im Bereich des sichtbaren Lichtes im gesamten Wellenlängenbereich größer als 450 nm, eine Lichttransmission im Sichtbaren von 0,8 - 5 % und eine Transmission im Infraroten bei 1600 nm von 45 - 85 % aufweist,
   **dass** eine Anzeigevorrichtung vorgesehen ist, und dass die Anzeigevorrichtung eine Anzeigeeinrichtung (8,9) aufweist, die unterschiedliche Betriebszustände mit unterschiedlichen Farben und/oder Symbolen anzeigend ausgebildet ist, und dass anstelle oder in Ergänzung zu roten Anzeigen eine oder mehrere andersfarbige Anzeigen unter der Kochfläche (1) angeordnet sind.

2. Kochfläche (1) nach Anspruch 1, **gekennzeichnet durch** Transmissionswerte von:

   > 0,15 % bei 450 nm
   > 0,15 % bei 500 nm
   > 0,25 % bei 550 nm
   3 - 9 % bei 630 nm
   50 - 80 % bei 1600 nm

   und eine Lichttransmission im Sichtbaren von 1,0 - 2,0 %.

3. Kochfläche (1) nach wenigstens einem der vorhergehenden Ansprüche 1 oder 2, **dadurch gekennzeichnet, dass** die Zusammensetzung der Glaskeramik (in Gew.-% auf Oxidbasis) im Wesentlichen besteht aus

   | | |
   |---|---|
   | $Li_2O$ | 3,0 - 4,2 |
   | $\sum Na_2O+K_2O$ | 0,2 - 1,5 |
   | $MgO$ | 0 - 1,5 |
   | $\sum CaO+SrO+BaO$ | 0 - 4 |
   | $ZnO$ | 0 - 2 |
   | $B_2O_3$ | 0 - 2 |
   | $Al_2O_3$ | 19 - 23 |
   | $SiO_2$ | 60 - 69 |
   | $TiO_2$ | 2,5 - 4 |
   | $ZrO_2$ | 0,5 - 2 |
   | $P_2O_5$ | 0 - 3 |
   | $SnO_2$ | 0,1 - < 0,6 |

(fortgesetzt)

| | |
|---|---|
| $\sum TiO_2+ZrO_2+SnO_2$ | 3,8 - 6 |
| $V_2O_5$ | 0,01 - 0,06 |
| $Fe_2O_3$ | 0,03 - 0,2 |

mit der Bedingung:

$$1 < Fe_2O_3 / V_2O_5 < 8.$$

oder dass die Zusammensetzung der Glaskeramik, die in Gew.-% auf Oxidbasis im Wesentlichen besteht aus

| | |
|---|---|
| $Li_2O$ | 3,2 - 4,2 |
| $Na_2O$ | 0,1 - 1 |
| $K_2O$ | 0,1 - 1 |
| $\sum Na_2O+K_2O$ | 0,2 - 1,5 |
| $MgO$ | 0 - 1,5 |
| $\sum CaO+SrO+BaO$ | 0,1 - 4 |
| $ZnO$ | 0 - 2 |
| $B_2O_3$ | 0 - 1 |
| $Al_2O_3$ | 19 - 23 |
| $SiO_2$ | 60 - 68 |
| $TiO_2$ | 2,8 - 4 |
| $ZrO_2$ | 0,8 - 1,8 |
| $P_2O_5$ | 0 - 1,5 |
| $SnO_2$ | 0,1 - < 0,6 |
| $\sum TiO_2+ZrO_2+SnO_2$ | 4,4 - 6 |
| $V_2O_5$ | 0,01 - 0,05 |
| $Fe_2O_3$ | 0,07 - 0,18 |

mit der Bedingung:

$$2 < Fe_2O_3 / V_2O_5 < 6.$$

oder **gekennzeichnet durch** gute Schmelzbarkeit und Entglasungsfestigkeit des kristallisierbaren Ausgangsglases mit einer Verarbeitungstemperatur VA kleiner als 1320°C, einer oberen Entglasungsgrenze mindestens 30°C unter VA und mit einer Zusammensetzung der Glaskeramik, in Gew.-% auf Oxidbasis von:

| | |
|---|---|
| $Li_2O$ | 3,2 - 4,0 |
| $Na_2O$ | 0,2 - 1 |
| $K_2O$ | 0,1 - 1 |
| $\sum Na_2O+K_2O$ | 0,4 - 1,2 |
| $MgO$ | 0,1 - 1,2 |
| $CaO$ | 0,2 - 1 |
| $SrO$ | 0 - 1 |
| $BaO$ | 0 - 3 |
| $\sum CaO+SrO+BaO$ | 0,2 - 4 |
| $ZnO$ | 0 - 1,8 |
| $B_2O_3$ | 0 - 1 |
| $Al_2O_3$ | 19 - 22 |
| $SiO_2$ | 62 - 67 |
| $TiO_2$ | 2,8 - 4 |

(fortgesetzt)

| | |
|---|---|
| $ZrO_2$ | 0,5 - 1,6 |
| $P_2O_5$ | 0 - 1,5 |
| $SnO_2$ | 0,1 - 0,5 |
| $\sum TiO_2 + ZrO_2 + SnO_2$ | 4,2 - 6 |
| $V_2O_5$ | 0,01 - 0,05 |
| $Fe_2O_3$ | 0,08 - 0,15 |

mit der Bedingung:

$$2 < Fe_2O_3 / V_2O_5 < 6.$$

4. Kochfläche (1) nach wenigstens einem der vorhergehenden Ansprüche 1 bis 3, **gekennzeichnet durch** eine Zusammensetzung der Glaskeramik, die in Gew.-% auf Oxidbasis enthält:

| | |
|---|---|
| CaO | 0,2 - 1 |
| SrO | 0,1 - 1. |

5. Kochfläche (1) nach wenigstens einem der vorhergehenden Ansprüche 1 bis 4, **gekennzeichnet durch** einen Gleichgewichts-Sauerstoffpartialdruck $pO_2$ der Glaskeramik bzw. des kristallisierbaren Ausgangsglases von 1 bar bei einer Temperatur größer 1580°C, bevorzugt größer 1640°C oder dass der Gleichgewichts-Sauerstoffpartialdruck **durch** eine Temperatur der Glasschmelze von größer als 1700°C, bevorzugt größer als 1750°C eingestellt ist, wobei vorzugsweise vorgesehen ist, dass der $V_2O_5$-Gehalt weniger als 0,04, bevorzugt weniger als 0,03 Gew.-% beträgt.

6. Kochfläche (1) nach wenigstens einem der vorhergehenden Ansprüche 1 bis 5, **dadurch gekennzeichnet,** **dass** anstelle oder in Ergänzung zu den üblichen roten Anzeigen eine oder mehrere mehrfarbige Anzeigen, wie blaue, grüne, gelbe, orange oder weiße eingesetzt sind.

7. Kochfläche (1) nach einem der Ansprüche 1 bis 6, **dadurch gekennzeichnet,** **dass** zum Anzeigen eines Temperaturzustandes zumindest eines Teils des Gerätes und/oder eines Fehlerzustandes zumindest eines Teils des Gerätes eine Anzeigeeinrichtung (8, 9) vorhanden ist, und/oder dass eine Anzeigeeinrichtung (8) zum Anzeigen der Temperatur eines Teils der Kochfläche (1) oder einer Kochstelle (3) der Kochfläche (1) vorhanden ist, und/oder **dass** eine Anzeigeeinrichtung (9) zum Anzeigen eines Fehlerzustandes der Kochfläche (1) und/oder eines Teils der Kochfläche (1) und/oder einer Kochstelle (3) vorhanden ist.

8. Kochfläche (1) nach einem der vorhergehenden Ansprüche 1 bis 7, **dadurch gekennzeichnet,** **dass** die Anzeigeeinrichtung (8, 9) für die unterschiedlichen Betriebszustände unterschiedlich farbige Leuchtelemente mit zumindest zwei unterschiedlichen Farben besitzt, und/oder **dass** zur Anzeige eines Temperaturzustandes mindestens ein rotes und ein blaues Leuchtelement vorhanden sind, und/oder **dass** zur Anzeige eines Fehlerzustandes mindestens ein rotes und ein grünes Leuchtelement vorhanden sind, und/oder **dass** eine Anzeigeeinrichtung (8, 9) zur Anzeige unterschiedlicher Farben ausgebildet ist, und/oder **dass** die Anzeigeeinrichtung (8, 9) die Farben stufenlos als Farbverlauf anzeigt, und/oderdass die Anzeigeeinrichtung (8, 9) die Farben mit Leuchtsegmenten einer kreisförmigen Anzeige oder Leuchtelementen einer Balkenanzeige anzeigt.

9. Kochfläche (1) nach einem der vorhergehenden Ansprüche 1 bis 8,

**dadurch gekennzeichnet, dass** das zur Anzeige eines Temperaturzustandes ein rotes, ein oranges und ein blaues Leuchtelement vorhanden sind oder ein Leuchtelement vorhanden ist, welches eine rote, orange und blaue Farbe wiedergeben kann, und/oderdass zur Anzeige eines Fehlerzustandes ein rotes, ein oranges und ein grünes Leuchtelement (Ampelfarben) vorhanden sind oder ein einziges Leuchtelement, welches die Farben rot, orange und grün darstellen kann, und/oderdass die Anzeigeeinrichtungen (8, 9) zudem über Symbole verfügen, die die unterschiedlichen Betriebszustände darstellen.

10. Kochfläche (1) nach einem der Ansprüche 1 bis 9,
    **dadurch gekennzeichnet,**
    **dass** die farbigen Anzeigen aus Licht emittierenden elektrischen Bauteilen, insbesondere aus Leuchtdioden bestehen.

11. Kochfläche (1) nach einem der Ansprüche 1 bis 10,
    **dadurch gekennzeichnet,**
    **dass** die Unterseite der Kochfläche (1) glatt ausgebildet ist.

12. Verfahren zum Anzeigen eines Betriebszustandes einer Kochfläche (1), gemäß einem der Ansprüche 1 bis 11, wobei die Anzeigeeinrichtungen (8, 9) unterschiedliche vorbestimmte Betriebszustände mit unterschiedlichen Farben und/oder Symbolen anzeigen.

13. Verfahren nach Anspruch 11 oder 12,
    **dadurch gekennzeichnet,**
    **dass** als Betriebszustand ein Temperaturzustand und/oder ein Fehlerzustand des Gerätes oder eines Teils des Gerätes angezeigt wird, und/oderdass die Temperatur eines Teils der Kochfläche (1) oder einer Kochstelle (3) der Kochfläche oder eines Teils der Kochfläche (1) mit unterschiedlichen Farben angezeigt wird, und/oder
    **dass** ein Fehlerzustand eines Kochfeldes (1) und/oder eines Teils eines Kochfeldes (1) und/oder einer Kochstelle (3) mit unterschiedlichen Farben angezeigt wird, und/oder
    **dass** die unterschiedlichen Betriebszustände mit unterschiedlich farbigen Leuchtelementen mit zumindest zwei unterschiedlichen Farben angezeigt werden, und/oder
    **dass** unterschiedliche Temperaturzustände zumindest mit einem roten und einem blauen Leuchtelement oder einem einzigen Leuchtelement, welches rot und blau darstellen kann, angezeigt werden.

14. Verfahren nach einem der Ansprüche 11 bis 13, **dadurch gekennzeichnet,**
    **dass** ein Fehlerzustand mit einem roten und einem grünen Leuchtelement oder einem einzigen Leuchtelement, welches rot und grün darstellen kann, angezeigt wird, und/oder
    **dass** die Farben zur Darstellung eines Betriebszustandes stufenlos angezeigt werden, und/oderdass die Farben mit Leuchtsegmenten einer kreisförmigen Anzeige oder Leuchtelemente einer Balkenanzeige angezeigt werden, und/oder
    **dass** die Temperaturbetriebszustände mit den Farben rot für heiß, orange für warm und blau für kalt dargestellt werden, und/oder
    **dass** die Fehlzustände mit den Farben rot für einen kritischen Fehler, gelb/orange für einen für die Betriebssicherheit nicht kritischen Fehler und grün für fehlerfrei angezeigt werden.

15. Verfahren nach einem der Ansprüche 11 bis 14,
    **dadurch gekennzeichnet,**
    **dass** die Betriebszustände zudem mit Symbolen angezeigt werden, und/oder dass für Temperaturbetriebszustände als Symbol unterschiedliche Flammen- oder Feuergrößen und für Fehlerbetriebszustände unterschiedlich große Achtung-Zeichen verwendet werden.

16. Verfahren nach einem der Ansprüche 11 bis 15,
    **dadurch gekennzeichnet,**
    **dass** zusätzlich zur Anzeige mit Farben und/oder Symbolen die Anzeigeneinrichtungen blinken, wobei insbesondere sein kann,
    **dass** die Anzeigen je nach Fehler- und/oder Temperaturintensität schneller oder langsamer oder mit unterschiedlichen Rhythmen blinken.

**Tabelle 1: Zusammensetzungen und Eigenschaften erfindungsgemäßer Ausgangsgläser und Vergleichsglas 13**

| Glas Nr. | | | 1 | 2 | 3 | 4 | 5 | 6 | 7 | 8 | 9 | 10 | 11 | 12 | 13 |
|---|---|---|---|---|---|---|---|---|---|---|---|---|---|---|---|
| Zusammens etzungen in Gew% auf Oxidbasis | | | | Wie Glas Nr. 1 | Wie Glas Nr. 1 | | | | | Wie Glas Nr7 | | Wie Glas Nr9 | | | |
| Al2O3 | | | 20,8 | | | 20,9 | 21,0 | 20,90 | 21,7 | | 19,1 | | 21,0 | 20,9 | 21,2 |
| BaO | | | 2,19 | | | 2,26 | 0,97 | 1,48 | 1,01 | | 0,77 | | - | 2,30 | - |
| CaO | | | 0,44 | | | 0,46 | 0,40 | 0,40 | 0,13 | | 0,05 | | 0,5 | 0,42 | - |
| K2O | | | 0,24 | | | 0,20 | 0,25 | 0,30 | 0,22 | | 0,13 | | 0,4 | 0,22 | 0,15 |
| Li2O | | | 3,61 | | | 3,64 | 3,52 | 3,48 | 3,73 | | 3,59 | | 3,7 | 3,71 | 3,8 |
| MgO | | | 0,34 | | | 0,31 | 0,31 | 0,40 | 0,72 | | 1,16 | | 0,4 | 0,37 | 1,0 |
| Na2O | | | 0,58 | | | 0,62 | 0,45 | 0,50 | 0,33 | | 0,14 | | 0,6 | 0,59 | 0,45 |
| P2O5 | | | - | | | - | - | - | - | | - | | 0,6 | - | - |
| SiO2 | | | 65,2 | | | 64,9 | 66,70 | 66,10 | 65,3 | | 68,6 | | 65,8 | 65,14 | 67,2 |
| SnO2 | | | 0,24 | | | 0,24 | 0,24 | 0,24 | 0,27 | | 0,27 | | 0,26 | 0,24 | 0,2 |
| SrO | | | 0,10 | | | - | - | - | - | | | | 0,5 | - | - |
| TiO2 | | | 3,11 | | | 3,27 | 3,23 | 3,26 | 3,20 | | 2,58 | | 3,1 | 3,1 | 2,5 |
| ZnO | | | 1,52 | | | 1,50 | 1,38 | 1,36 | 1,60 | | 1,51 | | 1,6 | 1,5 | 1,7 |
| ZrO2 | | | 1,38 | | | 1,37 | 1,26 | 1,31 | 1,48 | | 1,71 | | 1,35 | 1,34 | 1,7 |
| CoO | | | - | | | 0,039 | 0,069 | 0,065 | 0,039 | | 0,04 | | | | - |
| Fe2O3 | | | 0,12 | | | 0,12 | 0,15 | 0,15 | 0,12 | | 0,12 | | 0,09 | 0,085 | 0,03 |
| MnO2 | | | 0,020 | | | 0,028 | - | - | 0,028 | | 0,03 | | 0,02 | 0,025 | - |
| Nd2O3 | | | 0,015 | | | - | | | | | | | | | - |
| NiO | | | - | | | 0,013 | - | - | 0,012 | | 0,012 | | | | - |
| V2O5 | | | 0,024 | | | 0,024 | 0,037 | 0,042 | 0,025 | | 0,023 | | 0,027 | 0,026 | 0,06 |

(fortgesetzt)

| Zusatz Gemenge | Gew % | | | 1 (Zucker) | | | | | | | | | | |
|---|---|---|---|---|---|---|---|---|---|---|---|---|---|---|
| Eigenschaften | | | | | | | | | | | | | | |
| Tg | °C | 673 | | | 666 | 679 | 678 | 671 | | 680 | | 672 | 670 | 674 |
| $V_A$ | °C | 1306 | | | 1303 | 1327 | 1318 | 1296 | | 1332 | | 1318 | 1305 | 1310 |
| Dichte | g/cm$^3$ | 2,478 | | | 2,480 | 2,448 | 2,460 | 2,468 | | 2,443 | | 2,444 | 2,479 | 2,438 |
| Entglasungste mp | °C | 1255 | | | 1260 | 1265 | 1265 | 1290 | | 1310 | | 1235 | 1235 | 1280 |
| T (pO$_2$= 1bar) | °C | 1643 | 1582 | 1798 | 1654 | 1608 | 1617 | 1664 | 1548 | 1696 | 1595 | 1564 | 1600 | 1569 |
| Maximaltemp Schmelze, Zeit | °C h | 1850 1 | 1640 2 | 1640 2 | 1850 1 | 1640 2 | 1640 2 | 1850 1 | 1640 2 | 1850 1 | 1640 2 | 1640 2 | 1780 0,25 | 1640 2 |

**Tabelle 2:** Keramisierungsbedingungen und Eigenschaften erfindungsgemäßer Glaskeramiken und Vergleichsglaskeramiken, Beispiele 2, 4, 17

| Beispiel Nr | | 1 | 2 | 3 | 4 | 5 | 6 | 7 | 8 | 9 |
|---|---|---|---|---|---|---|---|---|---|---|
| Glas Nr. | | 1 | 2 | 2 | 3 | 3 | 4 | 4 | 5 | 6 |
| Keram.Prog. | | 1 | 1 | 1 | 1 | 1 | 2 | 2 | 2 | 2 |
| $T_{max}$ | °C | 900 | 900 | 940 | 900 | 860 | 890 | 875 | 875 | 875 |
| $t_{max}$ | min | 15 | 15 | 15 | 15 | 15 | 10 | 10 | 10 | 10 |
| Eigenschaften keramisiert: | | | | | | | | | | |
| Dichte | g/cm³ | 2,547 | | 2,547 | | 2,541 | | 2,546 | 2,526 | 2,532 |
| Thermische Ausdehnung | | | | | | | | | | |
| $\alpha_{20/700}$ | $10^{-6}$/K | 0,23 | | 0,58 | | 0,35 | | 0,32 | 0,01 | 0,20 |
| Transmission Normlicht C, 2° | | | | | | | | | | |
| 400 nm | % | 0,04 | 0,09 | 0,02 | 0,01 | 0,02 | 0,05 | 0,06 | 0,13 | 0,11 |
| 450 nm | % | 0,16 | 0,57 | 0,27 | 0,03 | 0,10 | 0,20 | 0,25 | 0,35 | 0,31 |
| 500 nm | % | 0,31 | 1,15 | 0,61 | 0,05 | 0,17 | 0,17 | 0,22 | 0,13 | 0,13 |
| 550 nm | % | 0,78 | 2,60 | 1,40 | 0,15 | 0,48 | 0,33 | 0,43 | 0,22 | 0,24 |
| 630 nm | % | 4,81 | 10,8 | 6,65 | 1,57 | 3,85 | 4,42 | 5,32 | 5,19 | 5,34 |
| 700 nm | % | 16,7 | 27,2 | 19,8 | 8,78 | 15,9 | 18,8 | 21,2 | 24,4 | 24,5 |
| 1600 nm | % | 69,4 | 70,0 | 69,6 | 67,8 | 67,6 | 54,8 | 55,8 | 48,0 | 48,8 |
| Lichttransmission | % | 1,4 | 3,9 | 2,2 | 0,4 | 1,0 | 1,0 | 1,2 | 1,0 | 1,1 |
| Röntgenbeugung | | | | | | | | | | |
| HQz-Phasengehalt | % | 62 | | 50 | | 60 | . | 61 | 65 | 63 |
| mittlere Kristallitgröße | nm | 48 | | -- | | 38 | | 38 | 32 | 35 |

**Tabelle 2 (Fortsetzung): Keramisierungsbedingungen und Eigenschaften erfindungsgemäßer Glaskeramiken und Vergleichsglaskeramiken, Beispiele 2, 4, 17**

| Beispiel Nr | | 10 | 11 | 12 | 13 | 14 | 15 | 16 | 17 | 18 | 19 |
|---|---|---|---|---|---|---|---|---|---|---|---|
| Glas Nr. | | 7 | 8 | 8 | 9 | 10 | 11 | 11 | 13 | | 12 |
| Keram. Prog. | | 2 | 2 | 2 | 2 | 2 | 1 | 2 | 2 | 2 | 2 |
| T max | °C | 890 | 915 | 930 | 915 | 935 | 930 | 930 | 930 | 915 | 915 |
| t max | min | 10 | 10 | 10 | 5 | 10 | 15 | 15 | 15 | 3 | 3 |
| Eigenschaften keramisiert: | | | | | | | | | | | |
| Dichte | g/cm³ | 2,548 | | 2,554 | 2,540 | 2,544 | 2,522 | 2,525 | 2,527 | 2,546 | 2,543 |
| Thermische Ausdehnung | | | | | | | | | | | |
| $\alpha_{20/700}$ | $10^{-6}$/K | 0,11 | | 0,07 | 0,02 | -0,04 | 0,02 | 0,01 | -0,14 | 0,24 | 0,23 |
| Transmission Normlicht C, 2° | | | | | | | | | | | |
| 400 nm | % | 0,07 | 0,16 | 0,14 | 0,02 | 0,06 | 0,03 | 0,03 | 0,01 | 0,03 | 0,30 |
| 450 nm | % | 0,20 | 0,57 | 0,47 | 0,16 | 0,29 | 0,18 | 0,19 | 0,04 | 0,15 | 0,38 |
| 500 nm | % | 0,16 | 0,46 | 0,37 | 0,19 | 0,29 | 0,35 | 0,37 | 0,15 | 0,28 | 0,40 |
| 550 nm | % | 0,36 | 0,86 | 0,68 | 0,51 | 0,67 | 0,85 | 0,90 | 0,92 | 0,72 | 0,85 |
| 630 nm | % | 5,37 | 8,91 | 7,48 | 7,90 | 8,51 | 5,03 | 5,21 | 9,96 | 4,72 | 5,19 |
| 700 nm | % | 22,9 | 29,4 | 26,4 | 29,3 | 29,2 | 17,4 | 17,7 | 28,6 | 17,0 | 18,3 |
| 1600 nm | % | 55,2 | 54,6 | 54,8 | 54,6 | 54,4 | 72,4 | 72,5 | 82,2 | 71,5 | 76,7 |
| Lichttransmission | % | 1,2 | 2,2 | 1,8 | 1,7 | 2,0 | 1,5 | 1,6 | 2,5 | 1,4 | 1,6 |
| Röntgenbeugung | | | | | | | | | | | |
| HQz-Phasengehalt | % | 68 | | 70 | 75 | 72 | 64 | 64 | 73 | 62 | 63 |
| mittlere Kristallitgröße | nm | 38 | | 46 | 43 | 44 | 46 | 44 | 43 | 44 | 42 |

Fig. 1: Messung des $pO_2$ als Funktion der Temperatur und Bestimmung derTemperatur des Gleichgewichts-Sauerstoffpartialdrucks T ($pO_2$ = 1 bar) am Beispiel von Glas Nr. 9

Fig. 2: Transmissionsspektren der erfindungsgemäßen Glaskeramiken Beispiel 18 und 19 sowie der Vergleichsglaskeramik Beispiel 17

**Fig. 3**

**Fig. 4**

**Fig. 5**

Fig. 6

Europäisches
Patentamt

European
Patent Office

Office européen
des brevets

## EUROPÄISCHER TEILRECHERCHENBERICHT

nach Regel 62a und/oder 63 des Europäischen Patentübereinkommens. Dieser Bericht gilt für das weitere
Verfahren als europäischer Recherchenbericht.

**Nummer der Anmeldung**

EP 13 18 6925

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X<br><br>Y | FR 2 908 130 A1 (SNC EUROKERA SOC EN NOM COLLEC [FR]) 9. Mai 2008 (2008-05-09)<br>* Zusammenfassung *<br>* Seite 5, Zeilen 6-17 *<br>* Seite 6, Zeilen 14-34 *<br>* Seite 7, Zeilen 18-21,25-28 *<br>* Seite 8, Zeilen 2-11 *<br>----- | 1-3,7<br><br>4-6,8-16 | INV.<br>C03C10/00 |
| X<br><br>Y | US 2005/252503 A1 (SIEBERS FRIEDRICH [DE] ET AL) 17. November 2005 (2005-11-17)<br>* Zusammenfassung *<br>* Absätze [0043], [0045], [0050], [0055] *<br>* Beispiel 4; Tabellen I,II *<br>* Ansprüche 8,17,18,20 *<br>----- | 1-3,7<br><br>4-6,8-16 | |
| Y | US 5 492 869 A (BEALL GEORGE H [US] ET AL) 20. Februar 1996 (1996-02-20)<br>* Zusammenfassung *<br>* Spalte 4, Zeilen 55-67 *<br>* Spalte 5, Zeilen 1,2,20-27 *<br>* Tabellen I,IV *<br>-----<br>-/-- | 1-16 | **RECHERCHIERTE SACHGEBIETE (IPC)**<br><br>C03C |

### UNVOLLSTÄNDIGE RECHERCHE

Die Recherchenabteilung ist der Auffassung, daß ein oder mehrere Ansprüche, den Vorschriften des EPÜ nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| Den Haag | 26. März 2014 | Mertins, Frédéric |

EPO FORM 1503 03.82 (P04E09)

Europäisches
Patentamt
European
Patent Office
Office européen
des brevets

**EUROPÄISCHER
TEILRECHERCHENBERICHT**

**Nummer der Anmeldung**

EP 13 18 6925

| | EINSCHLÄGIGE DOKUMENTE | | KLASSIFIKATION DER ANMELDUNG (IPC) |
|---|---|---|---|
| Kategorie | Kennzeichnung des Dokuments mit Angabe, soweit erforderlich der maßgeblichen Teile | Betrifft Anspruch | |
| Y | EP 1 465 460 A2 (NIPPON ELECTRIC GLASS CO [JP]) 6. Oktober 2004 (2004-10-06)<br>* Zusammenfassung *<br>* Beispiele 6,7; Tabelle 2 *<br>* Absatz [0035] *<br>* Anspruch 2 *<br>----- | 1-16 | |
| Y | FR 2 887 870 A1 (SNC EUROKERA SOC EN NOM COLLEC [FR]) 5. Januar 2007 (2007-01-05)<br>* Zusammenfassung *<br>* Seite 2, Zeilen 3-21 *<br>* Seite 3, Zeilen 3-6 *<br>* Seite 7, Zeilen 20-22 *<br>* Seite 17; Beispiel 3; Tabelle 2 *<br>----- | 1-16 | |
| Y | FR 2 837 265 A1 (BSH BOSCH SIEMENS HAUSGERAETE [DE]) 19. September 2003 (2003-09-19)<br>* Zusammenfassung *<br>* Seite 1, Zeile 35 *<br>* Seite 2, Zeilen 1,2,7-20 *<br>* Seite 4, Zeilen 5-10 *<br>----- | 12-16 | RECHERCHIERTE SACHGEBIETE (IPC) |

EPO FORM 1503 03.82 (P04C12)

Europäisches
Patentamt

European
Patent Office

Office européen
des brevets

**UNVOLLSTÄNDIGE RECHERCHE
ERGÄNZUNGSBLATT C**

Vollständig recherchierbare Ansprüche:
    2-16

Unvollständig recherchierte Ansprüche:
    1

Grund für die Beschränkung der Recherche:

Der vorliegende Anspruch 1 bezieht sich auf eine extrem große Zahl möglicher Erzeugnisse. Stützung und Offenbarung im Sinne der Artikel 84 und 83 EPÜ lassen sich jedoch nur für einen sehr kleinen Teil der beanspruchten Erzeugnisse finden, siehe die Beschreibung, Seite 14, Zeilen 11-32, die Tabelle 1 und 2 und der Anspruch 3. Die Verletzung der einschlägigen Erfordernisse ist so schwerwiegend, dass eine sinnvolle Recherche für den beanspruchten Gegenstand als Ganzes nicht durchgeführt werden konnte/kann (Regel 63 EPÜ und Richtlinien B-VIII, 3).

Die Recherche zu Anspruch 1 wurde auf die beanspruchten Erzeugnisse beschränkt, die anscheinend durch die Beschreibung gestützt sind, nämlich eine transparente, eingefärbte Kochfläche bestehend aus einer Glaskeramik mit Hochquarz-Mischkristallen als vorherrschender Kristallphase, wobei die Glaskeramik, bis auf unvermeidliche Spuren, keines der chemischen Läutermittel Arsenoxid und/oder Antimonoxid enthält, dadurch gekennzeichnet, dass die Glaskeramik Transmissionswerte von größer als 0,1 % im Bereich des sichtbaren Lichtes im gesamten Wellenlängenbereich größer als 450 nm, eine Lichttransmission im Sichtbaren von 0,8 - 5 % (vorzugsweise 0,8 - 2,5 %)und eine Transmission im Infraroten bei 1600 nm von 45 - 85 % aufweist, dass eine Anzeigevorrichtung vorgesehen ist, und dass die Anzeigevorrichtung eine Anzeigeeinrichtung (8,9) aufweist, die unterschiedliche Betriebszustände mit unterschiedlichen Farben und/oder Symbolen anzeigend ausgebildet ist und, dass die Zusammensetzung der Glaskeramik (in Gew.-% auf Oxidbasis) im Wesentlichen besteht aus $Li2O$ 3-4.2 %, ($Na2O$ + $K2O$) 0.2-1.5 %, $MgO$ 0-1.5 %, ($CaO$ + $SrO$ + $BaO$) 0-4 %, $ZnO$ 0-2 %, $B2O3$ 0-2 %, $Al2O3$ 19-23 %, $SiO2$ 60-69 %, $TiO2$ 2.5-4 %, $ZrO2$ 0.5-2 %, $P2O5$ 0-3 %, $SnO2$ 0.1-<0.6 %, ($TiO2$ + $ZrO2$ + $SnO2$) 3.8-6 %, $V2O5$ 0.01-0.06 % und $Fe2O3$ 0.03-0.2 %, mit der Bedingung: 1 < $Fe2O3$ / $V2O5$ < 8.

**ANHANG ZUM EUROPÄISCHEN RECHERCHENBERICHT
ÜBER DIE EUROPÄISCHE PATENTANMELDUNG NR.**  EP 13 18 6925

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2014

| Im Recherchenbericht angeführtes Patentdokument | Datum der Veröffentlichung | Mitglied(er) der Patentfamilie | Datum der Veröffentlichung |
|---|---|---|---|
| FR 2908130 A1 | 09-05-2008 | CN 101563298 A | 21-10-2009 |
| | | EP 2086894 A2 | 12-08-2009 |
| | | FR 2908130 A1 | 09-05-2008 |
| | | JP 5363329 B2 | 11-12-2013 |
| | | JP 2010508235 A | 18-03-2010 |
| | | KR 20090082380 A | 30-07-2009 |
| | | US 2009314034 A1 | 24-12-2009 |
| | | WO 2008056080 A2 | 15-05-2008 |
| US 2005252503 A1 | 17-11-2005 | CN 1696072 A | 16-11-2005 |
| | | DE 102004024583 A1 | 08-12-2005 |
| | | FR 2873684 A1 | 03-02-2006 |
| | | JP 2005325018 A | 24-11-2005 |
| | | US 2005252503 A1 | 17-11-2005 |
| US 5492869 A | 20-02-1996 | KEINE | |
| EP 1465460 A2 | 06-10-2004 | KEINE | |
| FR 2887870 A1 | 05-01-2007 | CN 101213152 A | 02-07-2008 |
| | | EP 1899276 A1 | 19-03-2008 |
| | | ES 2359899 T3 | 27-05-2011 |
| | | FR 2887870 A1 | 05-01-2007 |
| | | JP 5300474 B2 | 25-09-2013 |
| | | JP 2009500282 A | 08-01-2009 |
| | | KR 20080023360 A | 13-03-2008 |
| | | US 2007004578 A1 | 04-01-2007 |
| | | WO 2007003566 A1 | 11-01-2007 |
| FR 2837265 A1 | 19-09-2003 | DE 10211520 A1 | 25-09-2003 |
| | | FR 2837265 A1 | 19-09-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11100229 A
- JP 11100230 A
- US 20070004578 A1
- US 20080026927 A1
- DE 19939787 C2
- EP 1465460 A2

**In der Beschreibung aufgeführte Nicht-Patentliteratur**

- Low Thermal Expansion Glass Ceramics. Springer-Verlag, 1995, 66
- **WOLFRAM HÖLAND ; GEORGE BEALL.** Glass-Ceamic Technology. The American Ceramic Society, 2002
- Low Thermal Expansion Glass Ceramics. Springer-Verlag, 2005, 63